(19) Europäisches Patentamt
European Patent Office
Office européen des brevets

(11) EP 4 628 203 A1

(12) **EUROPEAN PATENT APPLICATION**

(43) Date of publication:
**08.10.2025 Bulletin 2025/41**

(21) Application number: **25162947.3**

(22) Date of filing: **11.03.2025**

(51) International Patent Classification (IPC):
***B01J 13/04*** *(2006.01)* ***B01J 2/18*** *(2006.01)*

(52) Cooperative Patent Classification (CPC):
**B01J 13/046; B01J 2/18**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.03.2024 JP 2024042215**
**11.10.2024 JP 2024178698**

(71) Applicant: **Ricoh Company, Ltd.**
**Tokyo 143-8555 (JP)**

(72) Inventors:
- **MATSUMOTO, Takahiko**
**Tokyo 143-8555 (JP)**
- **NONOYAMA, Yusuke**
**Tokyo 143-8555 (JP)**
- **ARAI, Daisuke**
**Tokyo 143-8555 (JP)**
- **MIYAOKA, Atsushi**
**Tokyo 143-8555 (JP)**
- **WATANABE, Ryuta**
**Tokyo 143-8555 (JP)**
- **YAGINUMA, Hidekazu**
**Tokyo 143-8555 (JP)**
- **KUBO, Chihiro**
**Tokyo 143-8555 (JP)**
- **SATOH, Naoki**
**Tokyo 143-8555 (JP)**

(74) Representative: **Marks & Clerk LLP**
**15 Fetter Lane**
**London EC4A 1BW (GB)**

(54) **LIQUID DROPLET FORMING APPARATUS AND METHOD OF MANUFACTURING GEL PARTICLES**

(57) A liquid droplet forming apparatus includes an ejection head configured to eject liquid droplets of liquid, in which the ejection head includes a tubular liquid holder that holds the liquid, and a vibration unit that covers one end side of the liquid holder, forms a liquid chamber holding the liquid together with the liquid holder, and ejects the liquid droplets on the basis of an electric signal to be applied, the vibration unit includes a vibration element that vibrates on the basis of the electric signal, a membrane that includes an outlet ejecting the liquid droplets, and a resonator that vibrates on the basis of the vibration of the vibration element and transmits the vibration of the vibration element to the membrane by vibrating itself, and the resonator is a plate that overlaps with the membrane as viewed in a plan view and is in contact with the membrane.

FIG. 2

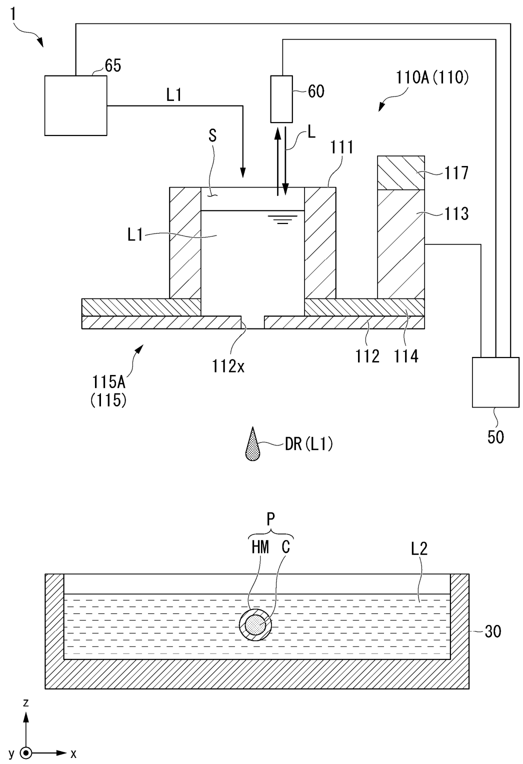


EP 4 628 203 A1

## Description

### BACKGROUND OF THE INVENTION

#### Field of the Invention

The present invention relates to a liquid droplet forming apparatus and a method of manufacturing gel particles. The present application claims priority under 35 U.S.C. § 119 to Japanese Patent Application No. 2024-178698, filed October 11, 2024, which in turn claims the benefit of priority to Japanese Patent Application No. 2024-042215, filed March 18, 2024. The contents of which are incorporated herein by reference in their entirety.

#### Description of Related Art

Gel particles are particles that are made of a gel. A gel is a polymer having a three-dimensional network structure or a swollen body of the polymer and can hold a large amount of water in the network structure of the polymer. Various functional molecules, such as a drug, a protein, and a dye, can be enclosed in such gel particles. In recent years, gel particles have attracted attention as a functional material in a wide range of fields such as medical care, food, cosmetics, optics, and printing.

A method using emulsion polymerization and a method using polyion complex formation are known as a method of manufacturing such gel particles.

Japanese Patent No. 5858451 discloses a method of producing gel particles having a narrow particle diameter distribution and a uniform size by preparing w/w emulsion, emulsifying the w/w emulsion with an oil phase to prepare w/w/o emulsion, and causing an outer water phase to gelate, as a method using emulsion polymerization.

Further, Japanese Unexamined Patent Application, First Publication No. 2010-201350 discloses a method of manufacturing gel particles by ejecting a first polymer electrolyte solution containing a first polymer electrolyte from a tip of a needle and bringing the formed fine liquid droplets into contact with a second polymer electrolyte solution containing a second polymer electrolyte, as a method using polyion complex formation. In an invention disclosed in Japanese Unexamined Patent Application, First Publication No. 2010-201350, a voltage is applied to the needle when the first polymer electrolyte solution is ejected from the tip of the needle to strongly charge the formed liquid droplets. Accordingly, the coalescence of the liquid droplets in flight is suppressed, such that gel particles having a uniform size are manufactured.

### SUMMARY OF THE INVENTION

Such gel particles are desired to have a small variation in particle diameter from the viewpoint of physical stability and quality stability of a product. However, the methods disclosed in Japanese Patent No. 5858451 and Japanese Unexamined Patent Application, First Publication No. 2010-201350 have room for improvement as follows.

In a case where gel particles are produced with the manufacturing method using emulsion polymerization disclosed in Japanese Patent No. 5858451, washing treatment for removing an oil-phase solvent and a surfactant used during the formation of the gel particles from the formed gel particles is desired. Since repeated washing with an organic solvent, such as ethanol, hexane, or acetone, is desirable in the washing, there are disadvantages such as taking a lot of time and using a large amount of water. Further, since the formed gel particles are subjected to a washing step multiple times, the gel particles are damaged due to mechanical stress during the washing process. Since fragments of the gel particles are formed when the gel particles are damaged, there is a concern that particle diameter distribution may vary.

Further, in the manufacturing method disclosed in Japanese Unexamined Patent Application, First Publication No. 2010-201350, liquid ejected from a manufacturing apparatus is strongly charged to suppress coalescence of liquid droplets. In this case, it is considered that gel particles having a varied particle diameter distribution are formed since a liquid droplet in flight is split into a plurality of smaller liquid droplets when an electrostatic repulsive force of a charged electric charge exceeds the surface tension of the liquid droplet. For this reason, in the manufacturing method disclosed in Japanese Unexamined Patent Application, First Publication No. 2010-201350, it is necessary to study appropriately controlling a charged environment in which liquid droplets are placed, appropriately selecting a solvent or a solute of the liquid droplets to increase the surface tension, and the like in order to prevent the liquid from being excessively charged.

In Japanese Patent No. 5858451, voltage is applied to the needle to strongly charge liquid droplets to be formed when the first polymer electrolyte solution is ejected from the tip of the needle. Accordingly, the charged liquid droplets are made to fly and the coalescence of the liquid droplets in flight is suppressed, such that microcapsules having a uniform size are manufactured.

In a case where microcapsules in which cells are enclosed are manufactured by the method disclosed in Japanese Patent No. 5858451, the cells are exposed to a charged environment during the spraying of liquid droplets from the needle and in the flying liquid droplets. For this reason, there is a concern about adverse effects on the cells since an electrical stimulus is applied to the cells during the manufacture of microcapsules in the method disclosed in Japanese Patent No. 5858451.

It is considered that problems in the related art described above can be solved in a case where a liquid droplet forming apparatus capable of forming liquid droplets having a uniform size can be realized. In the configuration of the apparatus in the related art, there is room for improvement in terms of making the sizes of the formed liquid droplets uniform.

The present invention has been made in view of such circumstances, and an object of the present invention is to provide a liquid droplet forming apparatus that can suitably manufacture liquid droplets having a uniform size. Further, another object of the present invention is to provide a method of manufacturing gel particles that suitably manufactures gel particles having a uniform size.

In order to achieve the above-described objects, an aspect of the present invention provides a liquid droplet forming apparatus including an ejection head configured to eject liquid droplets of liquid. The ejection head includes a tubular liquid holder that holds the liquid, and a vibration unit that covers one end side of the liquid holder, forms a liquid chamber holding the liquid together with the liquid holder, and ejects the liquid droplets on the basis of an electric signal to be applied, the other end side of the liquid holder of the liquid chamber is open to an atmosphere, the vibration unit includes a vibration element that vibrates on the basis of the electric signal, a membrane that includes an outlet ejecting the liquid droplets, and a resonator that vibrates on the basis of the vibration of the vibration element and transmits the vibration of the vibration element to the membrane by vibrating itself, and the resonator is a plate that overlaps with the membrane as viewed in a plan view and is in contact with the membrane.

According to the present invention, it is possible to provide a liquid droplet forming apparatus that can suitably manufacture liquid droplets having a uniform size. Further, it is possible to provide a method of manufacturing gel particles that suitably manufactures gel particles having a uniform size.

## BRIEF DESCRIPTION OF THE DRAWINGS

FIG. 1 is a schematic view of a liquid droplet forming apparatus 1 according to a first embodiment.
FIG. 2 is a partially enlarged view of the liquid droplet forming apparatus 1.
FIG. 3 is an exploded perspective view of an ejection head 110A.
FIG. 4 is a diagram showing a method of measuring a resonant frequency of structural vibration of vibration means.
FIG. 5 is a diagram showing an example of a drive waveform of a voltage supplied to the ejection head 110A.
FIG. 6 is a diagram showing a liquid droplet forming apparatus 2 according to a second embodiment.
FIG. 7 is a diagram showing the liquid droplet forming apparatus 2 according to the second embodiment.
FIG. 8 is a graph showing a particle diameter distribution of gel particles obtained in Example 1.
FIG. 9 is an image that is obtained in a case where cells in gel particles obtained in Example 3 are observed with a phase-contrast microscope.

## DETAILED DESCRIPTION OF THE INVENTION

### First embodiment

A liquid droplet forming apparatus and a method of manufacturing gel particles according to a first embodiment will be described below with reference to FIGS. 1 to 5. In the present embodiment, the liquid droplet forming apparatus is used to form liquid droplets that are precursors of gel particles. In all the following drawings, the dimensions, ratios, and the like of each component are made different in order to make the drawings easier to comprehend.

In the following description, an xyz Cartesian coordinate system will be set and a positional relationship of each member will be described with reference to the xyz Cartesian coordinate system. Here, a predetermined direction in a horizontal plane is defined as an x direction, a direction orthogonal to the x direction in the horizontal plane is defined as a y direction, and a direction orthogonal to each of the x direction and the y direction (that is, a vertical direction) is defined as a z direction.

Further, an upward direction in the vertical direction is defined as a +z direction, and a downward direction in the vertical direction is defined as a -z direction. In the following description, the same applies to the term "upper" of "upper side" and "upper surface" and the term "low" of "lower side" and "lower surface".

Furthermore, in the following description, the term "plan view" refers to viewing a target object from above (in the +z direction), and the term "planar shape" refers to the shape of the target object as viewed from above.

Gel particle

In the liquid droplet forming apparatus and the method of manufacturing gel particles according to the present embodiment, liquid droplets DR of a first solution L1 containing a first substrate are ejected and are brought into contact with a second solution L2 containing a second substrate that reacts with the first substrate to form a hydrogel. Accordingly, gel particles P each of which has a core C covered with a hydrogel film HM can be manufactured (see FIG. 1).
In the present specification, "gel" refers to a polymer having a three-dimensional network structure or a swollen body made of the polymer. A typical example of the gel is a hydrogel. In the present specification, the term "hydrogel" refers to a gel that holds a large amount of water in spaces in a three-dimensional network structure of the above-described polymer. The hydrogel is also called a "water-containing gel".

First substrate and second substrate

The first substrate and the second substrate are not particularly limited as long as forming a crosslinked structure by being mixed with each other and gelating and can be appropriately selected depending on the purpose.
Specifically, exemplary examples of the first substrate include biologically derived polymers such as collagen, elastin, gelatin, and fibroin; coagulation factors such as fibrinogen; adhesion factors such as fibronectin, laminin, and recombinant peptide; polysaccharide compound metal salts such as alginic acid and gellan gum; synthetic polymers such as polylactic acid and polyethylene glycol, and the like. These may be used alone, or two or more types thereof may be used in combination.
Specifically, exemplary examples of the second substrate include polysaccharides, polyvalent metal salts, fibrinogen, thrombin, fibronectin, laminin, recombinant peptide, chitosan, chitin, tetrafunctional polyethylene glycol (Tetra-PEG), and the like. These may be used alone, or two or more types thereof may be used in combination.
With regard to a combination of the first and second substrates, a preliminary experiment may be performed in advance to determine a combination in which a hydrogel having desired physical properties is obtained.
It is preferable that the hydrogel to be obtained is a material functioning as a scaffold material in a case where cells are cultured. For example, in a case where sodium alginate is used as the first substrate and a calcium salt such as calcium chloride is used as the second substrate, it is preferable that the produced hydrogel (calcium alginate) is a material used for research purposes as a scaffold material for cells.
Further, a substance (dispersoid) to be enclosed in the gel particles P may be dispersed in the first solution L1. Such a substance, which is contained in the first solution L1 and is intended to be enclosed in the gel particles P, may be hereinafter referred to as an "enclosed substance". Accordingly, the gel particles P to be obtained are particles containing (enclosing) the enclosed substance.
A solvent (dispersion medium) of the first solution L1 is not particularly limited as long as it is an aqueous solution in which the first substrate can be dissolved and the enclosed substance can be dispersed. A publicly known buffer solution such as phosphate buffered saline or Hank's balanced salt solution, or a culture medium suitable for cells to be used can be employed as the dispersion medium.
A solvent (dispersion medium) of the second solution L2 is not particularly limited as long as it is an aqueous solution in which the second substrate can be dissolved and the enclosed substance can be dispersed. The same solvent (dispersion medium) as the solvent (dispersion medium) of the first solution L1 can be employed as the solvent (dispersion medium) of the second solution L2.
The first solution L1 may contain any one or both of cells and spheroids as the enclosed substance (dispersoid).

Cell

Exemplary examples of the enclosed substance contained in the first solution L1 representatively include a cell. In a case where cells are used as the enclosedsubstance, the gel particles P are hydrogel particles in which the cells are enclosed.
The kind and the like of the cell are not particularly limited, and the cell can be appropriately selected depending on the purpose. For example, all cells can be used regardless of whether the cells are eukaryotic cells, prokaryotic cells, multicellular organism cells, or unicellular organism cells.
Exemplary examples of the eukaryotic cells include animal cells, insect cells, plant cells, fungi, and the like. One type of these may be used alone, or two or more types thereof may be used in combination. Among these, animal cells are preferable, and in a case where the cells form cell aggregates, adhesive cells, in which cells adhere to each other and which have a degree of cell adhesion that prevents isolation without performing a physicochemical treatment, are more preferable.
Adhesive cells are not particularly limited and can be appropriately selected depending on the purpose. Exemplary examples of the adhesive cells include differentiated cells, undifferentiated cells, and the like.

Exemplary examples of the differentiated cells include: hepatocytes, which are parenchymal cells of the liver; stellate cells; Kupffer cells; vascular endothelial cells; endothelial cells such as sinusoidal endothelial cells and corneal endothelial cells; fibroblasts; osteoblasts; osteoclasts; periodontal ligament-derived cells; epidermal cells such as epidermal keratinocytes; tracheal epithelial cells; intestinal epithelial cells; cervical epithelial cells; epithelial cells such as corneal epithelial cells; mammary glandular cells; pericytes; muscle cells such as smooth muscle cells and cardiac muscle cells; renal cells; islets of Langerhans cells; nerve cells such as peripheral nerve cells and optic nerve cells; cartilage cells; bone cells; and the like. The adhesive cells may be primary cells taken directly from tissues or organs, or may be cells that have been passaged for several generations.

The undifferentiated cells are not particularly limited and can be appropriately selected depending on the purpose. Exemplary examples of the undifferentiated cells include: pluripotent stem cells such as embryonic stem cells that are undifferentiated cells and mesenchymal stem cells that have pluripotency; unipotent stem cells such as vascular endothelial progenitor cells having unipotency; iPS cells, and the like.

The above-described cells may form a cell aggregate (spheroid).

The gel particles P to be obtained in this way may have a core-shell structure in which the first solution L1 is enclosed as the core C and the core C is surrounded by the film HM. Further, the gel particles P to be obtained may gelate up to the center (core C) as long as at least the surface thereof is covered with a hydrogel. Specifically, since the first substrate is contained in the core C, the core C may also gelate due to a reaction of the first substrate of the core C with the second substrate.

An average particle diameter of the gel particles P is not particularly limited but is preferably 1 μm or more and 1000 μm or less. For example, in a case where the enclosed substance contained in the first solution L1 is cells, it is preferable that the average particle diameter of the gel particles P is 5 μm or more.

From the viewpoint of physical stability and quality stability of a product, it is preferable that the gel particles P have a small variation in particle diameter. Further, in a case where the enclosed substance is contained in the gel particles P, the function or reactivity of the enclosed substance is affected. Accordingly, it is preferable that the gel particles P have no variation in a particle diameter distribution and have a uniform particle diameter.

In a case where a variation in the particle diameter of the gel particle P is large, the following concerns arise.

For example, in a case where the enclosed substance is a drug, slow release properties differ for each gel particle P. For this reason, there is a possibility of a variation in drug efficacy. Further, in a case where the enclosed substance is cells, oxygen and nutrients reaching the gel particles P differ for each gel particle P. For this reason, there is a concern that a survival rate of cells is affected.

A variation in the particle diameter of the gel particle P can be represented by a coefficient of variation (CV). The coefficient of variation of the gel particles P is obtained by calculation from an expression "(standard deviation) ÷ (average particle diameter) × 100". As the coefficient of variation is smaller, the variation is smaller. The coefficient of variation is preferably in a range of 20% or less.

It is possible to obtain the average particle diameter and the coefficient of variation of the gel particles P by capturing an enlarged image of an aggregate of the gel particles P obtained using a phase-contrast microscope (for example, CKX53 manufactured by Olympus Corporation) and analyzing the acquired image. In a case where the image is analyzed to obtain the average particle diameter and the coefficient of variation of the gel particles P, image processing software (Image J) can be used.

It is possible to adjust the average particle diameter of the gel particles P by appropriately using the ejection conditions such as an opening diameter of an outlet and the magnitude of an electric signal supplied to an ejecting portion by a control device (to be described later) in a manufacturing apparatus and a manufacturing method described below.

In the liquid droplet forming apparatus according to the present embodiment described below, the formation of the liquid droplets DR of the first solution L1 described above and a reaction between the liquid droplets DR and the second solution L2 can be suitably performed, such that gel particles having a coefficient of variation of 20% or less and a uniform particle diameter can be obtained.

Liquid droplet forming apparatus

FIG. 1 is a schematic view of a liquid droplet forming apparatus 1 according to the present embodiment. FIG. 2 is a partially enlarged view of the liquid droplet forming apparatus 1. As shown in FIGS. 1 and 2, the liquid droplet forming apparatus 1 includes an ejecting portion 10 and a control device 50. The liquid droplet forming apparatus 1 may further include a storage part 30 and a placement unit 40.

Ejecting portion

As shown in FIG. 1, the ejecting portion 10 includes ejection heads 110 and a transport unit 120.

Ejection head

The ejection head 110 employs a so-called ink jet method, and ejects the first solution L1, which is held in the ejection head 110, to form liquid droplets DR.

The "ink jet method" is a method of ejecting liquid, which is a material of liquid droplets, from a nozzle of an ejection head with high accuracy by a small amount. In the ejection head employing an ink jet method, stress such as pressure or an inertial force is instantaneously applied to the liquid stored in the ejection head. Accordingly, the liquid, which is present near the nozzle, of the liquid stored in the ejection head is separated as minute liquid according to the applied stress, and forms liquid droplets.

For example, in a case where gel particles are produced with the manufacturing method using emulsion polymerization disclosed in Japanese Patent No. 5858451 described above, washing treatment for removing an oil-phase solvent and a surfactant used during the formation of the gel particles from the formed gel particles is desired. Since repeated washing with an organic solvent, such as ethanol, hexane, or acetone, is desirable in the washing, there are disadvantages such as requiring a lot of time and a large amount of water. Further, since the formed gel particles are subjected to a washing step multiple times, the gel particles are damaged due to mechanical stress during the washing. Since fragments of the gel particles are formed in a case where the gel particles are damaged, there is a concern that particle diameter distribution may vary.

Further, in the manufacturing method disclosed in Japanese Unexamined Patent Application, First Publication No. 2010-201350, liquid ejected from the manufacturing apparatus is strongly charged to suppress coalescence of liquid droplets. In this case, it is considered that gel particles having a varied particle diameter distribution are formed since a liquid droplet in flight is split into a plurality of smaller liquid droplets in a case where an electrostatic repulsive force of a charged electric charge exceeds the surface tension of the liquid droplet. For this reason, in the manufacturing method disclosed in Japanese Unexamined Patent Application, First Publication No. 2010-201350, it is necessary to study appropriately controlling a charged environment in which liquid droplets are placed, appropriately selecting a solvent or a solute of the liquid droplets to increase the surface tension, and the like in order to prevent the liquid from being excessively charged.

Furthermore, in a case where a desired substance is to be enclosed in gel particles manufactured by the method disclosed in Japanese Patent No. 5858451, it is necessary to set conditions in consideration of an influence on the function, reactivity, or the like of the enclosed substance in a step of preparing an emulsion by emulsifying an oil phase, a step of UV curing an outer water phase, and a washing step.

In addition, in a case where a desired substance is to be enclosed in gel particles manufactured by the method disclosed in Japanese Unexamined Patent Application, First Publication No. 2010-201350, the substance is exposed to a charged environment during the spraying of liquid droplets from a needle and in the flying liquid droplets. For this reason, it is necessary to take measures against the adverse effect of an electrical stimulus applied to the enclosed substance.

In contrast, in the ejection head 110 employing an ink jet method, an emulsion or a charged environment is not used during the formation of the liquid droplets DR. For this reason, in a case where the ejection head 110 employing an ink jet method is used, it is not necessary to consider an adverse effect on a particle diameter distribution that is caused by an influence of the washing step or an overcurrent. Further, in a case where the enclosed substance is dispersed in the first solution L1 and the ejection head 110 employing an ink jet method is used, it is also not necessary to take measures against adverse effects on the function, reactivity, and the like of the enclosed substance that may be caused in a case where an emulsion or a charged environment is used.

The ejecting portion 10 may include only one ejection head 110 or may include a plurality of ejection heads 110. The ejecting portion 10 shown in FIG. 1 includes three ejection heads 110a, 110b, and 110c. The three ejection heads 110a, 110b, and 110c are collectively referred to as an ejection module 110L.

The ejection heads 110a, 110b, and 110c may have the same configuration or may have different configurations.

The three ejection heads 110a, 110b, and 110c are arranged in a direction (the x direction in FIG. 1) that intersects an ejection direction (the -z direction in FIG. 1) of the liquid ejected from the ejection head 110.

As shown in FIG. 2, the ejection head 110A includes a liquid holder 111, a vibration unit 115A, and a fixing part 117.

A space surrounded by the liquid holder 111 and the vibration unit 115A is a liquid chamber 110S of the ejection head 110. Liquid (first solution L1) that is a source of the liquid droplets DR is held in the liquid chamber 110S.

The amount of the first solution L1 held in the liquid chamber 110S is not particularly limited. For example, the amount of the first solution L1 held in the liquid chamber 110S can be about 1 $\mu$l to 1 ml. In a case where expensive liquid such as a drug or a cell suspension is ejected from the liquid droplet forming apparatus 1, the amount of the first solution L1 held in the liquid chamber 110S may be set to about 1 $\mu$l to 200 $\mu$l.

The ejection heads 110a, 110b, and 110c shown in FIG. 1 may hold the same first solution L1, or may hold first solutions L1 different from each other.

The configuration of the ejection head 110A will be described in more detail below. FIG. 3 is an exploded perspective view of the ejection head 110A.

Liquid holder

The liquid holder 111 is a tubular component of which both end portions in the z direction are open. The liquid holder 111 may be, for example, a cylindrical component. Exemplary examples of the material of the liquid holder 111 include: metals such as stainless steel, nickel, and aluminum; plastics (resin materials) such as ABS, polycarbonate, and a fluororesin; ceramics such as silicon dioxide, alumina, and zirconia; silicon; and the like.

A lower end portion, which is one end side of the liquid holder 111, is covered and closed by the vibration unit 115A. An upper end portion, which is the other end side of the liquid holder 111, is open to the atmosphere. In a case where the upper side of the liquid holder 111 is open to the atmosphere, it is difficult for the first solution L1, which is held in the liquid holder 111, to be pressurized during the ejecting of liquid droplets. For this reason, in a case where cells are contained in the first solution L1, damage to the cells can be suppressed.

Vibration unit

The vibration unit 115A includes a nozzle plate (membrane) 112, a vibration element 113, and a resonator 114. The resonator 114 is positioned on an upper side and the nozzle plate 112 is positioned on a lower side in the vibration unit 115A, but the vibration unit 115A is not limited thereto. The nozzle plate 112 may be positioned on the upper side and the resonator 114 may be positioned on the lower side.

Nozzle plate (membrane)

The nozzle plate 112 is a membrane including an outlet 112x. The nozzle plate 112 closes the lower end portion of the liquid holder 111 and forms the liquid chamber 110S, which holds the first solution L1, together with the liquid holder 111. The outlet 112x communicates with the liquid holder 111.

A planar shape, a size in a plan view, a material, and a structure of the nozzle plate 112 are not particularly limited and can be appropriately selected according to the purpose.

Exemplary examples of a planar shape of an outer edge of the nozzle plate 112 include a circular shape, an elliptical shape, a rectangular shape, a square shape, and a rhombic shape. For example, in a case where the shape of the outer edge of the nozzle plate 112 is a circular shape, the nozzle plate 112 is a circular ring-shaped component.

In a case where the nozzle plate 112 is too thick, it is difficult for the nozzle plate 112 to vibrate. In a case where the nozzle plate 112 is too thin, it is difficult for the vibration of the nozzle plate 112 to be suppressed. As a result, the stability of the ejection of the liquid droplets is reduced. For this reason, the thickness of the nozzle plate 112 is preferably 5 μm or more and 500 μm or less, and more preferably 20 μm or more and 100 μm or less.

For example, the nozzle plate 112 can be a circular component having a diameter of 20 mm and an average thickness of 0.05 mm (50 μm).

An end portion of the nozzle plate 112 facing the outlet 112x in plane directions (an inner peripheral end portion of the nozzle plate 112) is not supported. For this reason, the end portion of the nozzle plate 112 facing the outlet 112x can vibrate up and down. Since the end portion of the nozzle plate 112 facing the outlet 112x vibrates, the nozzle plate 112 applies a downward force to the first solution L1 near the outlet 112x and the first solution L1 is ejected from the outlet 112x as the liquid droplets DR.

In a case where the material of the nozzle plate 112 is too soft, the nozzle plate 112 easily vibrates and it is difficult to immediately suppress the vibration of the nozzle plate 112 when the liquid droplets are not ejected. For this reason, it is preferable that a material having a certain degree of hardness is used as the material of the nozzle plate 112.

Further, it is preferable that a material having high hydrophilicity is used as the material of the nozzle plate 112. Furthermore, in a case where the first solution L1 contains cells, it is preferable that a material which has low cytotoxicity and to which cells are less likely to adhere is used as the material of the nozzle plate 112. It is preferable that a material having high hydrophilicity is used as such a material.

Exemplary examples of such materials include metal, ceramics, polymer materials, and the like.

More specifically, exemplary examples of the material of the nozzle plate 112 include stainless steel, nickel, aluminum, silicon dioxide, alumina, zirconia, ABS, polycarbonate, a fluororesin, and the like. Further, it is possible to use a composite material in which a surface of a nozzle plate 112 made of a material different from the above-described material is coated with the above-described metal, ceramics, or a synthetic phospholipid polymer (for example, Lipidure, manufactured by NOF Corporation) that imitates a cell membrane.

The number of arranged outlets 112x, an arrangement mode of outlets 112x, an interval (pitch) between the outlets 112x, the shape of an opening of the outlet 112x, the size of the opening of the outlet 112x, and the like are not particularly limited and can be appropriately selected according to the purpose.

The shape of the opening of the outlet 112x can be appropriately selected according to the purpose. Exemplary examples of the shape of the opening of the outlet 112x include a circular shape, an elliptical shape, a quadrangular shape, and the like. Among these shapes, a circular shape is preferable as the shape of the opening of the outlet 112x.

An average opening diameter of the outlet 112x is not particularly limited and can be appropriately selected according to the purpose. In order to avoid the clogging of the outlet 112x that is caused by a dispersoid such as cells dispersed in the first solution L1 in a case where the first solution L1 to be ejected is dispersion liquid, it is preferable that the shape of the opening of the outlet 112x is at least twice the maximum diameter of the dispersoid.

In a case where the dispersoid dispersed in the first solution L1 is an animal cell, particularly a human cell, it is preferable that the average opening diameter of the outlet 112x is set to 10 μm or more and 1000 μm or less.

The size of a human cell varies depending on the type of cell, and is generally 5 μm or more and 50 μm or less. Further, in a case where the dispersoid is a cell aggregate (spheroid), the size of the cell aggregate is several tens of μm to several mm. For this reason, in a case where the size of the outlet 112x is the above-described size, and the outlet 112x having an appropriate average opening diameter is used depending on the cells to be ejected, the clogging of the outlet can be suppressed.

The outlet 112x is in a relationship in which while a relatively large cell aggregate can be ejected in a case where the opening diameter of the outlet 112x is large, it is difficult to realize stable ejection as the opening diameter thereof is increased. In a case where the average opening diameter of the outlet 112x is set to 1,000 μm or less, a large number of cell aggregates can be stably ejected. Further, in order to realize stable ejection, it is preferable that an upper limit of the average opening diameter of the outlet 112x is 200 μm or less.

Furthermore, as the opening diameter of the outlet 112x is smaller, shear stress is more likely to be applied to cells or cell aggregates passing through the outlet 112x when the cells or the cell aggregates pass through the outlet 112x. For this reason, it is preferable that the average opening diameter of the outlet 112x is large.

The position of the outlet 112x in the nozzle plate 112 is not particularly limited and can be appropriately selected according to the purpose. For example, the position of the outlet 112x may be a center of the nozzle plate 112 in a plan view or may be a position other than the center of the nozzle plate 112 in a plan view.

Further, the number of outlets 112x of the nozzle plate 112 may be one more. A nozzle plate 112 including a plurality of outlets 112x can be suitably employed in the cylindrical liquid holder 111. In the nozzle plate 112 exposed to an inner space of the liquid holder 111, the plurality of outlets 112x may be disposed at the same distance from a central axis of the liquid holder 111. In a case where the plurality of outlets 112x are disposed in this way, the vibration states of the nozzle plate 112 at the respective outlets 112x are equivalent, that is, the amplitudes and vibration modes of the nozzle plate 112 at the plurality of outlets 112x are equivalent. Therefore, it is possible to make whether or not liquid droplets are ejected, the size and ejection speed of liquid droplets during ejection equal.

The liquid holder for which the nozzle plate 112 including the plurality of outlets 112x can be employed is not limited to a cylindrical liquid holder. In a case where the vibration states of the nozzle plate 112 at the plurality of outlets 112x are equivalent, the nozzle plate 112 can be employed for liquid holders having various shapes. For example, in a case where an outlet is provided at each of positions overlapping with foci of an elliptical cylindrical liquid holder in an xy cross section (rectangular) of the liquid holder, the vibration states of the nozzle plate 112 at the respective outlets are equivalent. Therefore, it is possible to make whether or not liquid droplets are ejected, the size and ejection speed of liquid droplets during ejection equal.

Similarly, even in a case where the liquid holder has the shape of a square tube, an xy cross section of the liquid holder is assumed, an outlet is provided at any point in the cross section, and an outlet is provided at a position that is symmetric (line-symmetric or point-symmetric) with respect to the any point in the cross section, such that the vibration states of the nozzle plate 112 at the respective outlets are equivalent. Therefore, it is possible to make whether or not liquid droplets are ejected, the size and ejection speed of liquid droplets during ejection equal.

Vibrater

The vibration element 113 vibrates the nozzle plate 112 on the basis of an electric signal to be input and allows liquid droplets DR to be ejected from the outlet 112x. The vibration element 113 is installed on an upper surface of the nozzle plate 112 via the resonator 114 to be described later.

The shape, the size, the material, and the structure of the vibration element 113 are not particularly limited and can be appropriately selected according to the purpose. The shape and disposition of the vibration element 113 are not particularly limited as long as vibration can be transmitted to the resonator 114.

Exemplary examples of the vibration element 113 include a piezoelectric element and an electromagnetic solenoid, and a piezoelectric element is suitably used as the vibration element 113. For example, the piezoelectric element can have a structure in which electrodes for applying a voltage are provided on an upper surface and a lower surface of a piezoelectric material. In this case, a voltage is applied between the upper and lower electrodes of the piezoelectric element from the control device 50, such that compressive stress is applied in a lateral direction of a surface of a film. Accordingly, the resonator 114 can be vibrated in a vertical direction.

The piezoelectric material is not particularly limited and can be appropriately selected according to the purpose, and exemplary examples thereof include lead zirconate titanate (PZT), bismuth iron oxide, metal niobate, barium titanate, composites in which metals or different oxides are added to these materials, and the like. Among them, lead zirconate titanate (PZT) is preferable.

A vertical mode in which displacement in the vertical direction is applied can be used as a vibration mode of the piezoelectric element. For example, a laminated type piezoelectric element, which is laminated in the z direction, and expands in the vertical direction (z direction) and contracts in the lateral direction (xy direction) in a case where a voltage is applied, can be used as the piezoelectric element having the vertical mode.

The shape of the piezoelectric element is not particularly limited but is preferably a columnar shape or a quadrangular shape. In FIG. 3, a columnar laminated PZT is employed as the vibration element 113.

Resonantor

The resonator 114 is a plate that is in contact with the nozzle plate 112 and transmits the vibration of the vibration element 113 to the nozzle plate 112. Specifically, the resonator 114 is a component that vibrates on the basis of the vibration of the vibration element 113 and transmits the vibration of the vibration element 113 to the nozzle plate 112 by vibrating itself. The resonator 114 is thicker than the nozzle plate 112 and has high stiffness.

The resonator 114 is a component having an annular shape in a plan view. A hole 114x in the resonator 114 is disposed concentrically with the outlet 112x. In a case where the nozzle plate 112 includes a plurality of outlets 112x, the hole 114x is disposed at a position surrounding the plurality of outlets 112x in a plan view. An upper surface 114a of the resonator 114 holds the liquid holder 111 and the vibration element 113. A lower surface 114b of the resonator 114 holds the nozzle plate 112.

The shape of the resonator 114 is not limited to an annular shape in a plan view, and various shapes can be employed as long as the resonator 114 is in contact with the nozzle plate 112 and the vibration element 113 and can transmit the vibration of the vibration element 113 to the nozzle plate 112.

The resonator 114 and the vibration element 113 are bonded to each other by an adhesive (not shown). The elastic modulus of the adhesive is preferably 1 MPa or more and 1 GPa or less and more preferably 10 MPa or more and 100 MPa or less such that the displacement of the resonator 114 is not hindered. The thickness of a layer of the adhesive is preferably 1 mm or less and more preferably 200 μm or less such that the displacement of the resonator 114 is not hindered.

An inner peripheral end portion of the resonator 114 is exposed to the liquid chamber 110S. For this reason, it is preferable that the resonator 114 is made of a material not affecting the first solution L1. In particular, in a case where cells are contained in the first solution L1, it is preferable that the resonator 114 is made of a material having low cytotoxicity or the inner peripheral end portion of the resonator 114 is coated with a resin material having low cytotoxicity or the like.

A metal material having low brittleness, a synthetic resin, or the like is preferable as a material of the resonator 114. The resonator 114 made of each of these materials is less likely to be damaged even though vibration is repeatedly transmitted to the resonator 114 from the vibration element 113.

In a case where a predetermined electric signal (voltage pulse) is applied to the vibration element 113, the vibration element 113 vibrates the resonator 114. The vibration of the resonator 114 is further transmitted to the nozzle plate 112 and pressure is locally applied to the first solution L1 present near the nozzle plate 112 in the liquid chamber 110S, such that a flow of the first solution L1 toward the outlet 112x is generated. A part of the first solution L1 flowing in this way is ejected from the outlet 112x as the liquid droplets DR.

In the liquid droplet forming apparatus 1, high pressure is not applied to the entire liquid chamber by the above-described operation unlike in a publicly known ink jet head including a closed liquid chamber. For this reason, in a case where the enclosed substance is dispersed in the first solution L1, mechanical stress is unlikely to be applied to dispersoids. Further, in a case where the dispersoids are cells and dispersion liquid in which cells are dispersed is to be ejected, the liquid droplet forming apparatus 1 is preferable in that the cells dispersed in the dispersion liquid are less likely to be damaged.

The resonator 114 shown in FIGS. 2 and 3 is in direct contact with the vibration element 113, but the present invention is not limited thereto. As long as the vibration of the vibration element 113 is transmitted to the resonator 114, a component such as a spacer or an adjustment component used to adjust the resonant frequency of the resonator 114 may be interposed between the vibration element 113 and the resonator 114.

Fixing part

The fixing part 117 is provided at an upper end of the vibration element 113 and holds the ejection head 110A via the vibration element 113. Further, the fixing part 117 is used to mount the ejection head 110A on the transport unit 120.

Transport unit

The transport unit 120 includes a first moving unit 121 and a second moving unit 122.

First moving unit

The first moving unit 121 includes support parts 121a and linear moving parts 121b. The first moving unit 121 is a pair of parts that is provided at a +x side end portion and a -x side end portion of the second moving unit 122.
The support part 121a is a component having a rectangular shape in the field of view as viewed from the +y direction and supports the second moving unit 122.
The linear moving part 121b is a long component that extends in the z direction. The linear moving parts 121b move the support part 121a up and down in the z-axis direction. The linear moving part 121b can employ, for example, a publicly known linear actuator including a stepping motor as a drive source.
The first moving unit 121 moves the support part 121a in the z direction to move the ejection module 110L, which is supported by the second moving unit 122, in the z direction.

Second moving unit

The second moving unit 122 includes a support part 122a and a linear moving part 122b.
The support part 122a is a component having a rectangular shape in the field of view as viewed from the +y direction and supports the ejection module 110L.
The linear moving part 122b is a long component that extends in the x direction. The linear moving part 122b moves the support part 122a horizontally in the x direction. Both ends of the linear moving part 122b are supported by the support parts 121a of the first moving unit 121, respectively.
The linear moving part 122b can employ, for example, a publicly known linear actuator including a stepping motor as a drive source.
The second moving unit 122 moves the support part 122a in the x direction to move the ejection module 110L, which is supported by the support part 122a, in the x direction.

Storage part

The storage part 30 is disposed in the ejection direction of the liquid droplets DR and stores the second solution L2. The storage part 30 is a container that is open upward (+z direction). For example, both a shallow container such as a petri dish and a deep container such as a beaker can be used as the storage part 30.
A material of the storage part 30 is not particularly limited, and an organic material such as a synthetic resin, an inorganic material such as glass, a metal material, or the like can be appropriately employed as the material of the storage part 30.
The storage part 30 may be provided with a stirrer that stirs the second solution L2 to be stored therein. Accordingly, it is possible to suppress the precipitation and aggregation of the gel particles P to be formed in the second solution L2. A publicly known configuration can be employed as the stirrer.

Placement unit

The storage part 30 is placed on the placement unit 40. The placement unit 40 includes an x-stage 41, a y-stage 42, and a base 43.
The x-stage 41 supports and fixes the storage part 30. Further, the x-stage 41 moves the storage part 30 horizontally in the x direction.
The y-stage 42 moves the x-stage 41 horizontally in the y direction.
The base 43 supports the y-stage 42.
The placement unit 40 can employ publicly known configurations as the x-stage and the y-stage.

Control device

The control device (first control device) 50 generates an electric signal for operating each part of the liquid droplet forming apparatus 1 and supplies the electric signal to each part to control each part. For example, the control device 50 generates drive signals to be supplied to the ejecting portion 10 and the placement unit 40 and supplies the drive signals to each part to control the operation of each part. The control device 50 may be a dedicated device attached to the liquid droplet forming apparatus 1 or may be a general-purpose PC on which software for controlling the liquid droplet forming apparatus 1 is installed.

The control device 50 supplies an electric signal to control the operation of the ejection head 110A. More specifically, the control device 50 supplies an electric signal, which has a drive frequency of Equation (1), to the vibration element 113 of the vibration unit 115A. That is, an electric signal having a drive frequency of Equation (1) is supplied to the vibration element 113 as a method of driving the ejection head.

$$[\text{Drive frequency}] = ([\text{resonant frequency of structural vibration of resonator}] / n) \times a \qquad (1)$$

(Here, n is an integer of 1 to 100, and a represents 0.9 to 1.1.)

It is preferable that the n is an integer of 1 to 10.

Equation (A) indicates that the drive frequency of the vibration element 113 is substantially an integer fraction of the resonant frequency of the structural vibration of the resonator 114. The drive frequency does not need to be an exact integer fraction of the resonant frequency, and a coefficient a is set as an allowable range.

Here, the "resonant frequency of structural vibration of resonator" can be measured as follows. FIG. 4 is a diagram showing a method of measuring the resonant frequency of the structural vibration of vibration means.

As shown in FIG. 4, white noise of a voltage is applied to the vibration element 113 of the ejection head 110A from the control device 50 as an electric signal S. In this state, the vibration of the nozzle plate 112 near the outlet 112x is measured using a vibrometer 55. A publicly known laser doppler vibrometer can be used as the vibrometer 55. In a state where white noise of a voltage is applied to the vibration element 113, measurement laser light La is emitted to the nozzle plate 112 from the vibrometer 55 and vibration generated in the resonator 114 due to the white noise is measured.

The above-described measurement is performed in a case where (a) the liquid chamber 110S is filled with water and in a case where (b) the liquid chamber 110S is empty. In a case where two obtained vibration spectra are compared with each other, resonance points that appear at the same frequency regardless of the amount of water in the liquid chamber 110S can be found as peaks of the vibration spectra. Frequencies of these peaks can be understood as a shared frequency that is caused by the structural vibration of the used resonator 114.

It is possible to suitably eject liquid droplets by supplying an electric signal, which has a drive frequency of substantially an integer fraction of the resonant frequency of the resonator 114 (([resonant frequency of structural vibration of vibration means] / n) × a), to the vibration element 113 from the control device 50.

FIG. 5 is a diagram showing an example of a drive waveform of a voltage supplied to the ejection head 110A. The drive waveform shown in FIG. 5 is a sine wave of which a period is set to 55.6 μs corresponding to an oscillation period of a frequency of 18 kHz. The drive waveform does not necessarily need to be a continuous sine wave and may be a composite wave in which waveforms intended to stabilize the ejection of liquid droplets are combined and of which a frequency substantially matches the resonant frequency.

Effects obtained from the ejection head having such a configuration will be described below.

First, an ejection head in a case where the resonator 114 is not provided is considered. In this case, it is possible to form liquid droplets DR by vibrating the vibration element of the ejection head in accordance with the resonant frequency of the first solution L1 stored in the liquid chamber 110S. However, in this case, the resonant frequency of the first solution L1 is changed as the amount of the first solution L1 stored in the liquid chamber 110S is changed. For this reason, in order to realize stable ejection of liquid droplets DR, it is considered that a driving condition of the vibration element 113 needs to be changed according to the amount of the first solution L1 stored in the liquid chamber 110S. As a result, control is complicated.

Further, a case where an ejection head having a configuration in which a vibration element having the same shape as the resonator 114 is provided instead of the resonator 114 is used will be considered. In this case, it is considered that it is possible to stably ejection liquid droplets regardless of the amount of the first solution L1 stored in the liquid chamber 110S by supplying an electric signal, which has a drive frequency of substantially an integer fraction of "resonant frequency of structural vibration of vibration element", to the vibration element of the ejection head. In the ejection head having such a configuration, the resonant frequency of the vibration element can be measured by the same method as the method shown in FIG. 4.

However, in the ejection head having such a configuration, the driving condition of the vibration element is set from a discrete condition of substantially an integer fraction of "resonant frequency of structural vibration of vibration element". In a case where the ejection speed of a liquid droplet DR or the size of a liquid droplet DR is to be adjusted, it is considered to adjust a vibration condition of the vibration element to control the vibration state of the vibration element 113. However, in a case where settable drive conditions of the vibration element are limited, it may be necessary to change the vibration element itself in order to realize a desired ejection state of liquid droplets DR. Since the performance of the vibration element is naturally changed in a case where the vibration element is changed, condition setting may be further complicated.

On the other hand, in a case of a configuration in which the vibration of the vibration element 113 is transmitted to the nozzle plate 112 via the resonator 114 as in the ejection head 110A, it is possible to optionally produce the resonator 114, which exhibits a desired resonant frequency, by appropriately adjusting the material and the shape of the resonator 114. Accordingly, it is possible to produce the ejection head 110 that realizes a desired ejection state of liquid droplets DR.

In a case where the nozzle plate 112 is vibrated in the ejection head 110A, the resonant vibration of the resonator 114 can be utilized to continuously and stably eject liquid droplets DR regardless of the amount of the first solution L1 stored in the liquid chamber 110S. Accordingly, liquid droplets DR can be easily and stably formed in the liquid droplet forming apparatus 1, such that gel particles having a uniform size (particle diameter) can be suitably manufactured.

Detection unit and supply unit

The liquid droplet forming apparatus 1 may further include a detection unit 60 and a supply unit 65. The detection unit 60 detects the amount of the first solution L1 stored in the liquid chamber 110S of the ejection head 110.

The detection unit 60 may be, for example, a liquid-level meter that emits measurement light L from above the liquid chamber 110S to measure a height of the liquid surface of the first solution L1. Further, in a case where at least a part of the liquid holder 111 is optically transparent, a liquid-level meter that measures a liquid level position of the first solution L1 stored in the liquid chamber 110S from the outside of the liquid holder 111 may be used.

The supply unit 65 supplies the first solution L1 to the liquid chamber 110S on the basis of a detection result of the detection unit 60. The supply unit 65 can be used without being particularly limited as long as the supply unit 65 is a device that can supply the first solution L1 to the liquid chamber 110S.

The control device 50 controls the supply unit 65 on the basis of the detection result of the detection unit 60 to maintain the amount of the first solution L1, which is stored in the liquid chamber 110S, at a prescribed amount or more. The control device 50 that performs such control corresponds to a second control device of the present invention.

Specifically, in a case where a measurement result in which the amount of the first solution L1 (the height of the liquid surface of the first solution L1) stored in the liquid chamber 110S is lower than a preset threshold value (prescribed value) is obtained by the detection unit 60, the control device 50 drives the supply unit 65 to supply the first solution L1 to the liquid chamber 110S. In this case, it is possible to maintain the height of the liquid surface of the first solution L1 at a prescribed amount or more and to manage the height of the liquid surface of the first solution L1 between the set value and the prescribed value by setting a liquid level position of the first solution L1 after the supply of the first solution L1 to a position (set value) higher than the prescribed value.

Further, the amount of the first solution L1 stored in the liquid chamber 110S may be roughly estimated on the basis of the amount (initial value) of the first solution L1, which is obtained at the start of ejection, and the total amount of the ejected liquid droplets DR to predict a timing at which the amount of the first solution L1 (the height of the liquid surface of the first solution L1) stored in the liquid chamber 110S falls below the prescribed value. In this case, the supply unit 65 can supply a prescribed amount of the first solution L1 to the liquid chamber 110S at the timing predicted in this way to adjust the liquid level position of the first solution L1 to a position higher than the prescribed value.

According to the liquid droplet forming apparatus having the above-described configuration, it is possible to form liquid droplets having a uniform size (particle diameter). For this reason, it is possible to suitably manufacture gel particles having a uniform size (particle diameter) by using the liquid droplet forming apparatus.

In the present embodiment, the control device 50 has been described as serving as both the control device (first control device) that controls the operation of the ejection head and the control device (second control device) that controls the operation of the supply unit 65 on the basis of the detection result of the detection unit 60. However, the present invention is not limited thereto. The liquid droplet forming apparatus may include the first control device and the second control device independently.

Second embodiment

FIGS. 6 and 7 are diagrams showing a liquid droplet forming apparatus according to a second embodiment. Components common to the first embodiment will be denoted in the present embodiment by the same reference numeral, and detailed description thereof will be omitted.

In an ejection head 110B of a liquid droplet forming apparatus 2, a vibration unit 115B includes a detachable part 118. The detachable part 118 is provided between the resonator 114 and the vibration element 113. The detachable part 118 includes a first detachable part 118a and a second detachable part 118b. The first detachable part 118a is attachable to and detachable from the second detachable part 118b.

The first detachable part 118a is a component that is provided on the upper surface 114a of the resonator 114 and has an annular shape in a plan view. The first detachable part 118a and the annular resonator 114 having an annular shape in a plan view likewise are concentrically disposed such that the central axes thereof coincide with each other in a plan view. An outer edge of the first detachable part 118a is positioned outside an outer edge of the resonator 114.

In the ejection head 110B, a configuration including the liquid holder 111, the nozzle plate 112, and the resonator 114 will be referred to as an ejection unit 150. The first detachable part 118a and the resonator 114 are bonded to each other by an adhesive (not shown). Accordingly, the first detachable part 118a is integrated with the ejection unit 150, and the ejection unit 150 is detached from the liquid droplet forming apparatus 1 in a case where the first detachable part 118a is detached from the second detachable part 118b.

The elastic modulus of the adhesive is preferably 1 MPa or more and 1 GPa or less and more preferably 10 MPa or more and 100 MPa or less such that the displacement of the resonator 114 is not hindered. The thickness of a layer of the adhesive is preferably set to 1 mm or less and more preferably set to 200 $\mu$m or less such that the displacement of the resonator 114 is not hindered.

A material of the first detachable part 118a is not particularly limited.

It is preferable that the resonant frequency of the first detachable part 118a is different from the resonant frequency of the resonator 114. Accordingly, the resonance of the resonator 114 is not hindered.

The second detachable part 118b is provided at a lower end of the vibration element 113. The second detachable part 118b may be screwed to the first detachable part 118a or may be fixed to the first detachable part 118a by a luer lock method.

A material of the second detachable part 118b is not particularly limited.

It is preferable that the resonant frequency of the second detachable part 118b is different from the resonant frequency of the resonator 114. Accordingly, the resonance of the resonator 114 is not hindered.

As shown in FIG. 7, the liquid droplet forming apparatus 2 includes a plurality of ejection units 150 (in FIG. 7, a first ejection unit 150A and a second ejection unit 150B) and the ejection units 150 are replaceable. Accordingly, in a case where different types of first solutions L1 are to be ejected from the liquid droplet forming apparatus 2, the ejection unit 150 can be replaced to suppress the mixing of samples of gel particles P to be obtained. Further, the ejection unit 150 can be easily replaced even in a case where the ejection unit 150 is damaged or contaminated. The liquid droplet forming apparatus 2 includes two ejection units 150 in FIG. 7 but may include three or more ejection units 150.

Furthermore, the resonant frequencies of a resonator 114A of the first ejection unit 150A and a resonator 114B of the second ejection unit 150B can be set to be different from each other. Accordingly, since it is easy to adjust ejection conditions of liquid droplets DR, it is easy to realize a desired ejection state of the liquid droplets DR.

Method of manufacturing gel particles

The above-described liquid droplet forming apparatuses 1 and 2 can be used to suitably perform a method of manufacturing gel particles and to manufacture gel particles having a uniform size. The method of manufacturing gel particles includes a step of dropping liquid droplets DR of the first solution L1 ejected from the ejection head 110 into the stored second solution L2 in the ejection direction of the liquid droplets DR to form gel particles P of which at least the surfaces are covered with a hydrogel.

As described above, the first solution L1 contains the first substrate. A substance to be enclosed in the gel particles P to be obtained may be dispersed in the first solution L1. For example, the first solution L1 may contain any one or both of cells and spheroids as the enclosed substance (dispersoid). The second solution L2 contains a second substrate that reacts with the first substrate to form a hydrogel.

In the present manufacturing method, the liquid droplet forming apparatuses 1 and 2 that include the resonator 114 and vibrate the nozzle plate 112 via the resonated resonator 114 to eject the liquid droplets DR can be used to realize the stable ejection of the liquid droplets DR and to stably manufacture gel particles P having a uniform size.

According to the liquid droplet forming apparatus having the above-described configuration, the liquid droplets DR of the first solution L1 can be easily and stably formed, and gel particles having a uniform size can be suitably manufactured.

Further, according to the above-described method of manufacturing gel particles, gel particles having a uniform size can be suitably manufactured.

The preferred embodiments of the present invention have been described above with reference to the accompanying drawings, but the present invention is not limited to such embodiments. The shapes, combinations, and the like of the respective components described in the above-described embodiments are examples and can be modified in various ways on the basis of design requirements and the like without departing from the scope of the present invention.

For example, a configuration (an apparatus for manufacturing gel particles) in which gel particles are formed using the liquid droplet forming apparatus has been described in the above-described embodiments, but the use of the liquid droplet forming apparatus is not limited thereto. Since the above-described liquid droplet forming apparatuses exhibit an effect of being capable of ejecting liquid droplets having a uniform size, the above-described liquid droplet forming apparatuses can be suitably used, for example, even in a case where liquid is to be dispensed in the same volume.

Further, in the liquid droplet forming apparatus, the control device 50 may be connected to a server via a wired or wireless line. The server may be installed in a facility in which the liquid droplet forming apparatus is disposed, may be installed in a facility that is managed by a user of the liquid droplet forming apparatus, or may be set on a cloud network.

Furthermore, shaping results of liquid droplets or gel particles under manufacturing conditions set at the time of use may be input to the control device 50 in association with the manufacturing conditions.

In cases of the configurations of the above-described embodiments, it is preferable that the liquid droplet forming apparatuses 1 and 2 can upload the manufacturing conditions set at the time of use and manufacturing results of gel particles obtained under the manufacturing conditions to the server. In addition, it is preferable that the liquid droplet forming apparatuses 1 and 2 can download manufacturing conditions set in a case where another user uses the liquid droplet forming apparatuses 1 and 2 in other environments and manufacturing results obtained under the manufacturing conditions from the server. The manufacturing conditions, which can be uploaded and downloaded, include not only conditions under which suitable gel particles are obtained but also conditions under which suitable gel particles are not obtained.

Since the plurality of liquid droplet forming apparatuses 1 and 2 are allowed to share information on the manufacturing conditions and the manufacturing results via the server, users of the liquid droplet forming apparatuses 1 and 2 can easily obtain manufacturing conditions suitable for desired gel particles and can easily manufacture desired gel particles without performing many trials and errors.

Examples

The present invention will be described in detail below with reference to Examples, but the following description is not intended to limit the scope of the present invention to the scope of Examples.

Example 1

In the above-described liquid droplet forming apparatus, an ejection head having an opening diameter of 200 μm is used, an electric signal having a drive frequency of Equation (1) is supplied to the vibration element to drive the vibration element such that liquid droplets are formed, and gel particles are produced.

$$[\text{Drive frequency}] = ([\text{resonant frequency of structural vibration of resonator}] / n) \times a \qquad (1)$$

$$(n = 1, a = 1)$$

(1) Preparation of first solution

100 mg of sodium alginate (KIMICA ALGIN SKAT-ONE, manufactured by KIMICA Corporation) is dissolved in 5 mL of PBS (-) (Dulbecco's Phoshate Buffered Saline: DPBS (1×), manufactured by Gibco), and a mixture thereof is then filtered through a filter having an average pore size of 0.2 μm (Minisart S6534, manufactured by Sartorius AG) to prepare a sodium alginate aqueous solution having a concentration of 2.0 (w/v)%. After that, 1.5 g of the sodium alginate aqueous solution having a concentration of 2.0 (w/v)% is mixed with 0.5 g of PBS (-) to prepare a sodium alginate aqueous solution having a concentration of 1.5 (w/v)%.

"(w/v)%" means a mass-to-volume ratio concentration that defines a ratio of the weight of a solute contained in a solvent per unit volume.

(2) Preparation of second solution

605 mg of calcium chloride (model number: 039-00475, manufactured by Wako Pure Chemical Industries, Ltd.) (hereinafter, referred to as "$CaCl_2$") is dissolved in 50 mL of ultrapure water, and a mixture thereof is then filtered through the above-described filter to prepare a $CaCl_2$ aqueous solution (second solution) having a concentration of 109 mmol/L.

(3) Production of gel particles

Liquid droplets are dropped into a 35-mm dish, which contains 3 mL of the second solution, using an ejection head filled with the first solution to produce gel particles.

Particle diameter and coefficient of variation of gel particles

An enlarged image of an aggregate of the obtained gel particles is captured using a phase-contrast microscope (CKX53, manufactured by Olympus Corporation), and the acquired image is analyzed to obtain a particle diameter distribution and a coefficient of variation. FIG. 8 is a histogram showing the particle diameter distribution of gel particles obtained on the basis of analysis results. In FIG. 8, a horizontal axis represents the particle diameter (μm) of the gel particle, a left vertical axis represents a frequency (count), and a right vertical axis represents a ratio (%). The average particle diameter of the gel particles of Example 1 is 218 μm, and the coefficient CV of variation thereof is 6.5%. Since the particle diameter distribution has a high kurtosis as seen from FIG. 8, it is confirmed that the particle diameter is uniform.

Example 2

(1) Culture of C2C12 cells

In an incubator ($CO_2$ incubator KM-CC17RU2, manufactured by Panasonic Corporation), C2C12 cells are cultured in a 150-mm dish for 72 hours using Dulbecco's Modified Eagle Medium (DMEM (1×), manufactured by Thermo Fisher Scientific, Inc., hereinafter, referred to as "DMEM") that contains 10% by mass of fetal bovine serum (hereinafter, referred to as "FBS") and 1% by mass of antibiotics (Antibiotic-Antimycotic Mixed Stock Solution (100×), manufactured by Nacalai Tesque, Inc.).

(2) Production of C2C12 cell suspension

15 mL of PBS (-) is added to the dish, PBS (-) is aspirated and removed by an aspirator, and the surface is washed. After washing is performed using PBS (-), 6 mL of a 0.05% trypsin-0.05% EDTA solution (manufactured by life technologies) is added to the dish, the dish is heated in an incubator for 5 minutes, and cells are detached from the dish.

After the detachment of the cells is confirmed using a phase-contrast microscope, 6 mL of DMEM containing FBS is added to the dish to inactivate trypsin. A cell suspension contained in the dish is transferred to one centrifuge tube having a volume of 50 mL, centrifugation (H-19FM, manufactured by KOKUSAN Corporation, 200 × g, 3 minutes) is performed, and a supernatant is removed using an aspirator. After the removal, 6 mL of DMEM containing FBS is added to the centrifuge tube and pipetting is gently performed to obtain a cell suspension in which cells are dispersed.

100 μL of the obtained cell suspension is taken out into an Eppendorf tube, a sample is aspirated into a cassette (Vial-Cassette, manufactured by Chemometec), and the number of cells is measured using a cell counter (Nucleo Counter NC-3000, manufactured by Chemometec), such that the number of cells contained in the liquid is obtained. A part of the cell suspension is transferred to a centrifuge tube having a volume of 50 mL, centrifugation (200 × g, 3 minutes) is performed, and a supernatant is removed using a pipette. PBS (-) is added to a remainder from which the supernatant has been removed to obtain a cell suspension having a cell concentration of $4 \times 10^7$ cells/mL.

(3) Production of gel particles

A sodium alginate aqueous solution that has a concentration of 1.5 (w/v)% and a cell concentration of $1 \times 10^7$ cells/mL is prepared in the same manner as in Example 1, except that 0.5 mL of the above-described cell suspension is mixed with the sodium alginate aqueous solution instead of 0.5 g of PBS (-).

Gel particles in which cells are enclosed are produced in the same manner as in Example 1, except that the obtained sodium alginate aqueous solution is used.

Particle diameter and coefficient of variation of gel particles

In a case where the measurement is performed in the same manner as in Example 1, an average particle diameter of obtained gel particles is 270 μm and a coefficient CV of variation thereof is 16%. It was found that, even though cells are enclosed, the coefficient of variation of gel particles is 20% or less and gel particles having a uniform size are formed.

Example 3

Gel particles are produced in the same manner as in Example 2. After PBS (-) is removed, DMEM containing 10% by mass of FBS and 1% by mass of an antibiotic is added. Further, PI (P1304MP, manufactured by Thermo Fisher Scientific, Inc.) and Hoechst (H3570, manufactured by Thermo Fisher Scientific, Inc.) are added to be diluted 2,000 times, such that dispersion liquid of gel particles is prepared.

The obtained dispersion liquid is dispensed to any five wells of a plate having 96 wells in a plurality of times, and the number of gel particles in each well is measured with a phase-contrast microscope. FIG. 9 is an enlarged image of cells that are enclosed in gel particles.

The gel of the gel particles is dissolved in 55 mmol/L of sodium citrate (model number: 191-01785, manufactured by Wako Pure Chemical Industries, Ltd.) aqueous solution for 2 minutes to disperse cells from the gel particles. After that, the cells are observed with a phase-contrast microscope to obtain a fluorescence observation image of PI and Hoechst.
The cells stained with PI are defined as dead cells and the cells stained with Hoechst are defined as total cells on the basis of the fluorescence observation image, and a survival rate (%) is calculated as "(the number of total cells - the number of dead cells) / (the number of total cells) × 100". Results are shown in Table 1.

Table 1

| No. | Gel particle (piece) | Number of cells in well (piece) | Average number of cells per gel particle (piece) | Survival rate of cells in well (%) |
|---|---|---|---|---|
| 1 | 40 | 21631 | 541 | 92 |
| 2 | 18 | 7772 | 432 | 89 |
| 3 | 18 | 10005 | 556 | 91 |
| 4 | 49 | 21485 | 439 | 86 |
| 5 | 17 | 9778 | 575 | 91 |

As shown in Table 1, a high cell survival rate of 80% or more is obtained in all wells. It was confirmed that a cell survival rate is not adversely affected in the process of manufacturing gel particles even in a case where the gel particles in which cells are enclosed are produced using the liquid droplet forming apparatus and the manufacturing method according to the embodiment of the present invention.

Comparative example 1

Gel particles are produced in the same manner as in Example 1, except that an electric signal having a drive frequency obtained from Equation (1) described in Example 1 in a case where n is 180 and a is 1 is supplied to drive an ejection head having an opening diameter of 160 μm.
In a case where the obtained gel particles are measured in the same manner as in Example 1, an average particle diameter of the gel particles is 87 μm and a coefficient CV of variation thereof is 66%. It is confirmed that the particle diameter varies since a particle diameter distribution has a large coefficient of variation and a wide width.

Comparative example 2

Gel particles are produced in the same manner as in Example 1, except that an electric signal having the same drive frequency as that in Comparative example 1 is supplied to drive an ejection head having an opening diameter of 500 μm.
In a case where the obtained gel particles are measured in the same manner as in Example 1, an average particle diameter of the gel particles is 84 μm and a coefficient CV of variation thereof is 28%. It is confirmed that the particle diameter varies since a particle diameter distribution has a coefficient of variation larger than 20% and a wide width.
The present invention includes the following aspects.

[1] A liquid droplet forming apparatus including:

an ejection head configured to eject liquid droplets of liquid,
in which the ejection head includes a tubular liquid holder that holds the liquid, and a vibration unit that covers one end side of the liquid holder, forms a liquid chamber holding the liquid together with the liquid holder, and ejects the liquid droplets on the basis of an electric signal to be applied,
the other end side of the liquid holder of the liquid chamber is open to an atmosphere,
the vibration unit includes a vibration element that vibrates on the basis of the electric signal, a membrane that includes an outlet ejecting the liquid droplets, and a resonator that vibrates on the basis of the vibration of the vibration element and transmits the vibration of the vibration element to the membrane by vibrating itself, and the resonator is a plate that overlaps with the membrane as viewed in a plan view and is in contact with the membrane.

[2] The liquid droplet forming apparatus according to [1], further including:

a first control device configured to supply the electric signal to control an operation of the ejection head,
in which the first control device supplies the electric signal having a drive frequency of Equation (1) to the vibration element,

$$[\text{Drive frequency}] = ([\text{resonant frequency of structural vibration of the resonator}]/n) \times a \quad (1)$$

(Here, n is an integer of 1 to 100, and a represents 0.9 to 1.1).
[3] The liquid droplet forming apparatus according to [1] or [2],

in which the vibration unit includes a detachable part provided between the resonator and the vibration element, and
the detachable part allows an ejection unit that includes the liquid holder, the membrane, and the resonator, and the vibration element to be attachable to and detachable from each other.

[4] The liquid droplet forming apparatus according to [3],
in which a plurality of the ejection units are provided.
[5] The liquid droplet forming apparatus according to [4],

in which the plurality of ejection units include a first ejection unit and a second ejection unit, and
the second ejection unit includes a second resonator of which a resonant frequency is different from a resonant frequency of a resonator of the first ejection unit.

[6] The liquid droplet forming apparatus according to any one of [1] to [5], further including:

a detection unit configured to detect an amount of the liquid in the liquid chamber;
a supply unit configured to supply the liquid to the liquid chamber; and
a second control device configured to control the supply unit on the basis of a detection result of the detection unit to maintain the amount of the liquid, which is stored in the liquid chamber, at a prescribed amount or more.

[7] The liquid droplet forming apparatus according to any one of [1] to [6], further including:

a storage part that is disposed in an ejection direction of the liquid droplets,
in which the liquid is a first solution containing a first substrate,
the storage part stores a second solution containing a second substrate, and
the first substrate reacts with the second substrate to form a hydrogel.

[8] The liquid droplet forming apparatus according to [7],
in which the first solution contains a dispersoid that is any one or both of cells and spheroids.
[9] A method of manufacturing gel particles, including:
a step of dropping the liquid droplets ejected from the ejection head into the stored second solution in the ejection direction of the liquid droplets using the liquid droplet forming apparatus according to [7] or [8] to form gel particles of which at least surfaces are covered with the hydrogel.

Further, in order to achieve an object that is to be capable of suitably manufacturing microcapsules (gel particles) having a uniform size, the present invention includes the following aspects.
[A1] An apparatus for manufacturing microcapsules, including:

an ejection head configured to eject liquid droplets of a first solution containing a first substrate and a dispersoid which is any one or both of cells and spheroids;
a storage part disposed in an ejection direction of the liquid droplets and configured to store a second solution containing a second substrate; and
a control unit configured to supply an electric signal to control an operation of the ejection head,
in which the first substrate reacts with the second substrate to form a hydrogel,
the ejection head includes a tubular liquid holding part that holds the first solution and a vibration unit that ejects the liquid droplets on the basis of the electric signal,
the vibration unit includes a membrane that includes an outlet ejecting the liquid droplets, a vibration element that vibrates on the basis of the electric signal, and a resonator that is in contact with the membrane and the vibration element and transmits the vibration of the vibration element to the membrane,
the vibration unit covers one end side of the liquid holding part and forms a liquid chamber holding the first solution together with the liquid holding part,
the other end side of the liquid holding part of the liquid chamber is open to an atmosphere, and
the control unit supplies the electric signal having a drive frequency of Equation (1) to the vibration element,

$$[\text{Drive frequency}] = ([\text{resonant frequency of structural vibration of resonator}]/\ n) \times a \quad (1)$$

(Here, n is an integer of 1 to 100, and a represents 0.9 to 1.1).

[A2] The apparatus for manufacturing microcapsules according to [A1],

in which the vibration unit includes a detachable part provided between the resonator and the vibration element, and
the detachable part allows an ejection unit that includes the liquid holding part, the membrane, and the resonator, and the vibration element to be attachable to and detachable from each other.

[A3] The apparatus for manufacturing microcapsules according to [A2],
in which a plurality of the ejection units are provided.

[A4] The apparatus for manufacturing microcapsules according to [A3]

in which the plurality of ejection units include a first ejection unit and a second ejection unit, and
the second ejection unit includes a second resonator of which a resonant frequency is different from a resonant frequency of a resonator of the first ejection unit.

[A5] The apparatus for manufacturing microcapsules according to any one of [A1] to [A4], further including:

a detection unit configured to detect an amount of the first solution in the liquid chamber;
a supply unit configured to supply the first solution to the liquid chamber; and
a control unit configured to control the detection unit and the supply unit,
in which the control unit controls the supply unit on the basis of a detection result of the detection unit to maintain the amount of the first solution, which is stored in the liquid chamber, at a prescribed amount or more.

[A6] A method of manufacturing microcapsules, including:
a step of dropping the liquid droplets ejected from the ejection head into the stored second solution in the ejection direction of the liquid droplets using the apparatus for manufacturing microcapsules according to any one of [A1] to [A5] to form microcapsules covered with a hydrogel film.

EXPLANATION OF REFERENCES

1, 2: liquid droplet forming apparatus
30: storage part
50: control device
60: detection unit
65: supply unit
110, 110a to 110c, 110A, 110B: ejection head
110S: liquid chamber
110L: ejection module
111: liquid holder
112: nozzle plate (membrane)
112x: outlet
113: vibration element
114, 114A, 114B: resonator
115A, 115B: vibration unit
118: detachable part

150, 150A, 150B: ejection unit
DR: liquid droplet
L: liquid
L1: first solution
L2: second solution
HM: hydrogel film
P: gel particle
S: electric signal

## Claims

**1.** A liquid droplet forming apparatus comprising:

an ejection head configured to eject liquid droplets of liquid,
wherein the ejection head includes a tubular liquid holder that holds the liquid, and a vibration unit that covers one end side of the liquid holder, forms a liquid chamber holding the liquid together with the liquid holder, and ejects the liquid droplets on the basis of an electric signal to be applied,
the other end side of the liquid holder of the liquid chamber is open to an atmosphere,
the vibration unit includes a vibration element that vibrates on the basis of the electric signal, a membrane that includes an outlet ejecting the liquid droplets, and a resonator that vibrates on the basis of the vibration of the vibration element and transmits the vibration of the vibration element to the membrane by vibrating itself, and the resonator is a plate that overlaps with the membrane as viewed in a plan view and is in contact with the membrane.

**2.** The liquid droplet forming apparatus according to Claim 1, further comprising:

a first control device configured to supply the electric signal to control an operation of the ejection head,
wherein the first control device supplies the electric signal having a drive frequency of Equation (1) to the vibration element,

$$[\text{Drive frequency}] = ([\text{resonant frequency of structural vibration of the resonator}] /n) \times a \quad (1)$$

(Here, n is an integer of 1 to 100, and a represents 0.9 to 1.1).

**3.** The liquid droplet forming apparatus according to Claim 1 or 2,

wherein the vibration unit includes a detachable part provided between the resonator and the vibration element, and
the detachable part allows an ejection unit that includes the liquid holder, the membrane, and the resonator, and the vibration element to be attachable to and detachable from each other.

**4.** The liquid droplet forming apparatus according to Claim 3,
wherein a plurality of the ejection units are provided.

**5.** The liquid droplet forming apparatus according to Claim 4,

wherein the plurality of ejection units include a first ejection unit and a second ejection unit, and
the second ejection unit includes a second resonator of which a resonant frequency is different from a resonant frequency of a resonator of the first ejection unit.

**6.** The liquid droplet forming apparatus according to any one of Claim 1 to 5, further comprising:

a detection unit configured to detect an amount of the liquid in the liquid chamber;
a supply unit configured to supply the liquid to the liquid chamber; and
a second control device configured to control the supply unit on the basis of a detection result of the detection unit to maintain the amount of the liquid, which is stored in the liquid chamber, at a prescribed amount or more.

**7.** The liquid droplet forming apparatus according to any one of Claim 1 to 6, further comprising:

a storage part that is disposed in an ejection direction of the liquid droplets,
wherein the liquid is a first solution containing a first substrate,
the storage part stores a second solution containing a second substrate, and
the first substrate reacts with the second substrate to form a hydrogel.

**8.** The liquid droplet forming apparatus according to Claim 7,
wherein the first solution contains a dispersoid that is any one or both of cells and spheroids.

**9.** A method of manufacturing gel particles, comprising:
a step of dropping the liquid droplets ejected from the ejection head into the stored second solution in the ejection direction of the liquid droplets using the liquid droplet forming apparatus according to Claim 7 or 8 to form gel particles of which at least surfaces are covered with the hydrogel.

FIG. 1

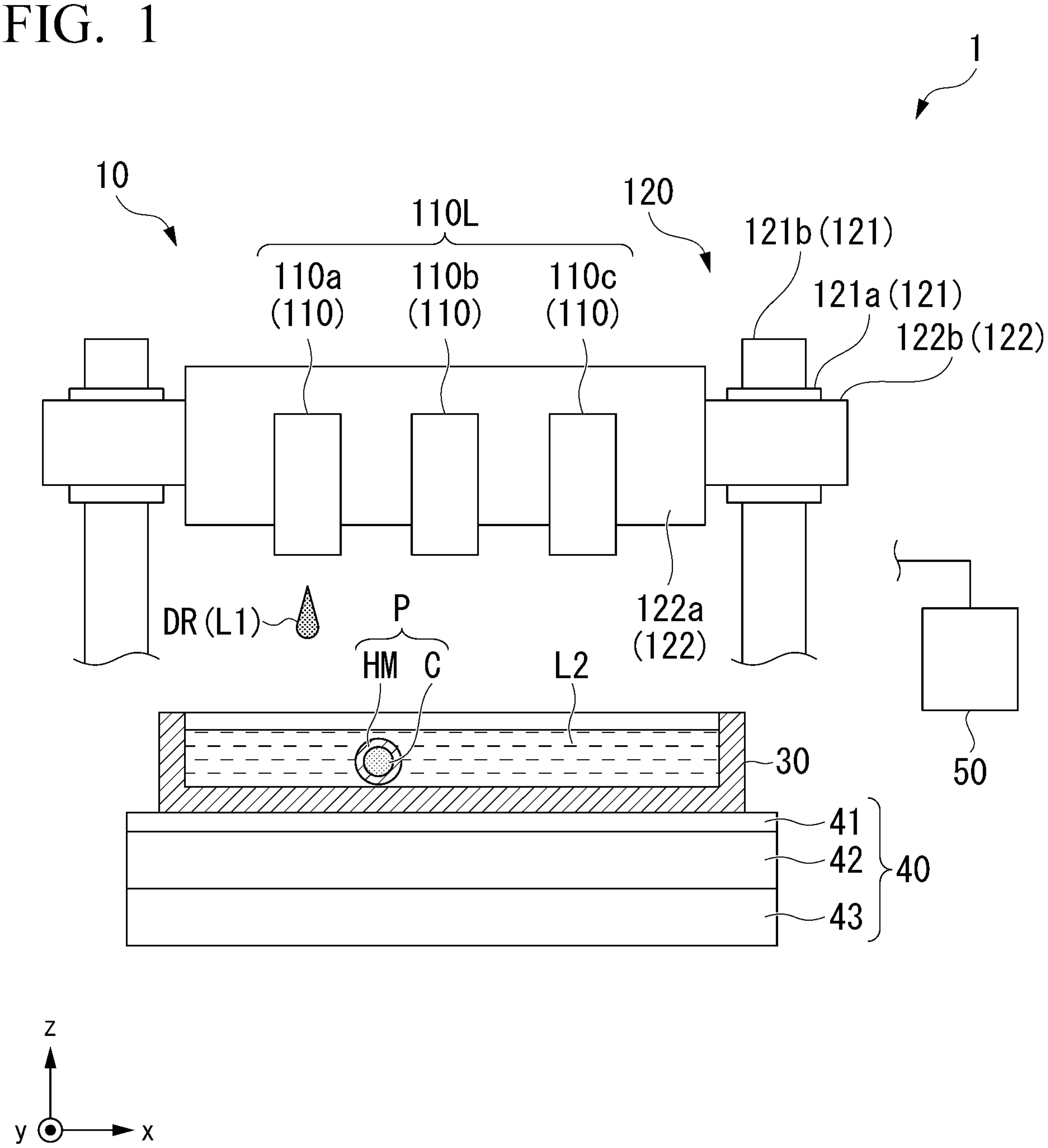
1
10
110L
120
110a
(110)
110b
(110)
110c
(110)
121b (121)
121a (121)
122b (122)
DR (L1)
P
HM
C
L2
122a
(122)
30
50
41
42
43
40
z
y
x

FIG. 2

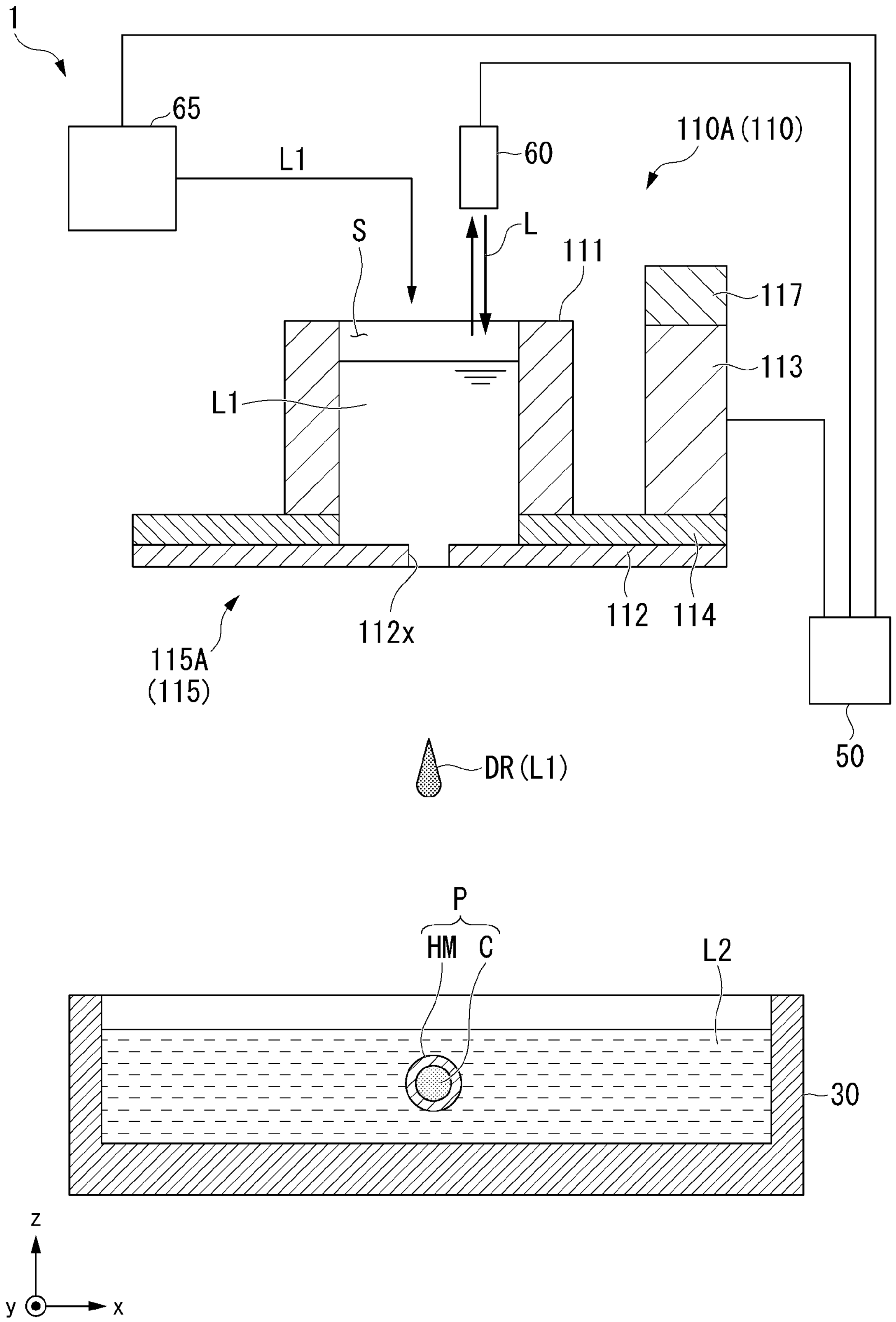
1
65
L1
60
110A(110)
L
S
111
117
113
L1
112x
112
114
115A
(115)
DR(L1)
50
P
HM
C
L2
30
z
y
x

FIG. 3

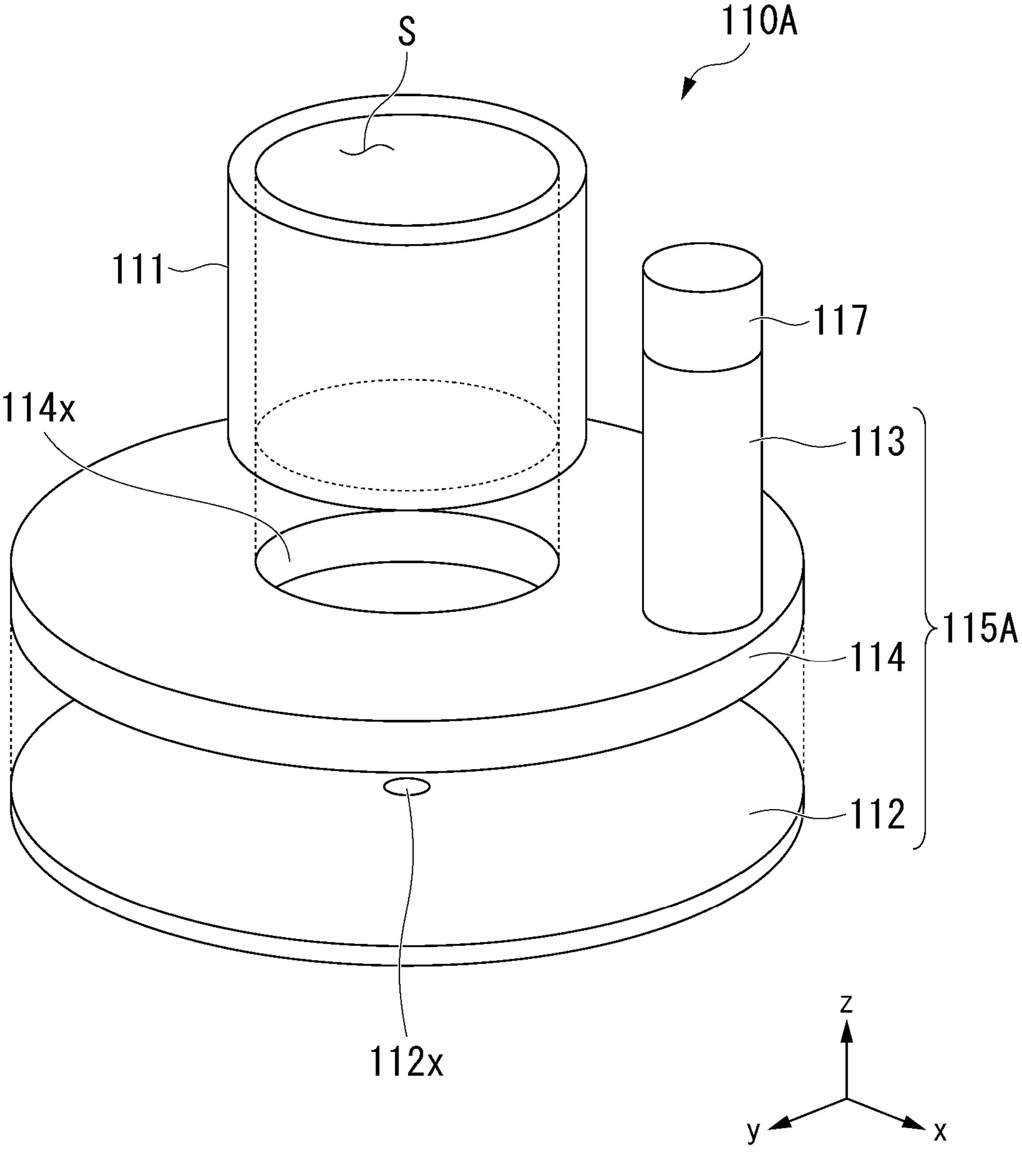

FIG. 4

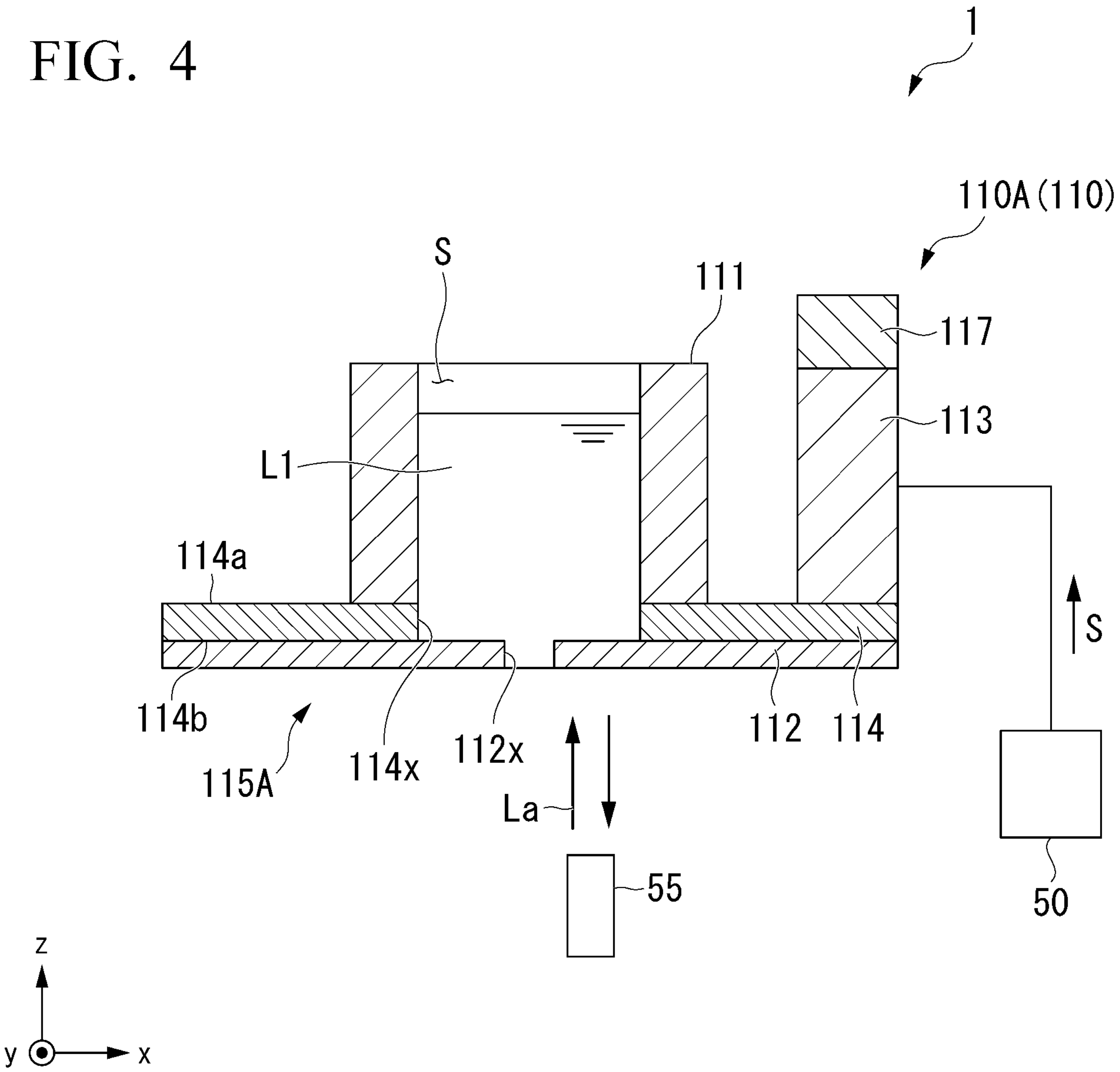
1
110A(110)
S
111
117
113
L1
114a
S
114b
115A
114x
112x
112
114
La
55
50
z
y
x

FIG. 5

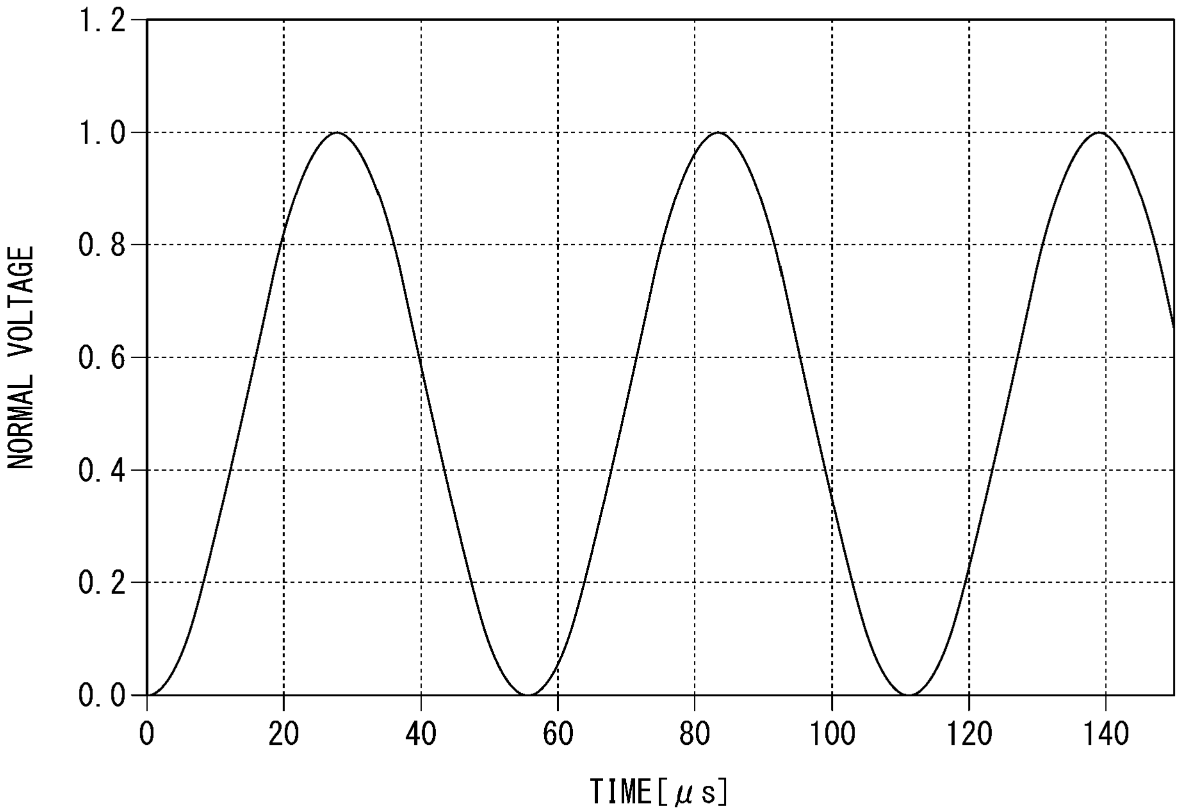
1.2
1.0
0.8
0.6
0.4
0.2
0.0
NORMAL VOLTAGE
0
20
40
60
80
100
120
140
TIME[μs]

FIG. 6

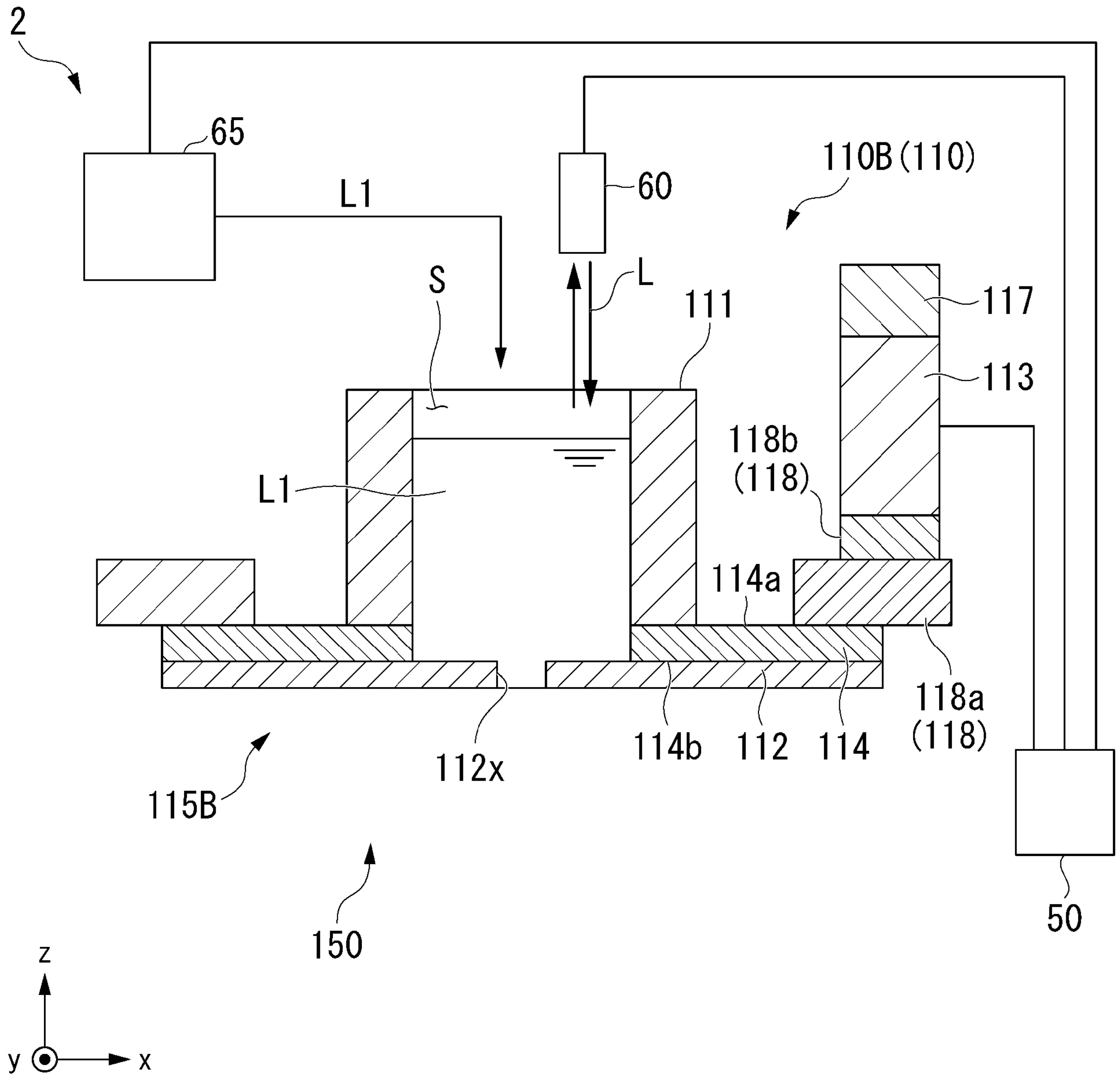
2
65
L1
60
110B (110)
S
L
111
117
113
118b
(118)
L1
114a
118a
(118)
114b
112
114
112x
115B
150
50
z
y
x

FIG. 7

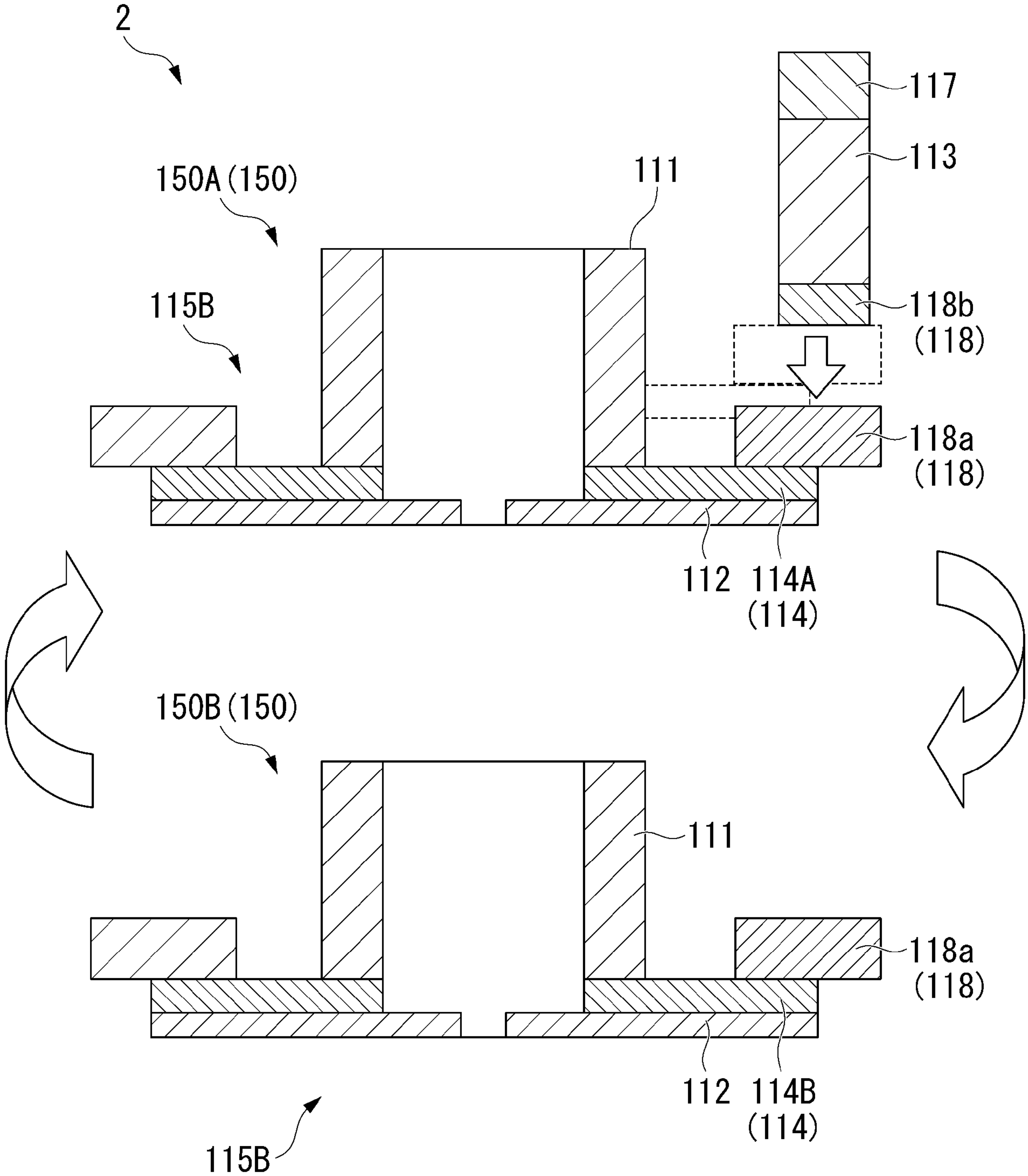
2
150A (150)
111
117
113
115B
118b
(118)
118a
(118)
112
114A
(114)
150B (150)
111
118a
(118)
112
114B
(114)
115B

FIG. 8

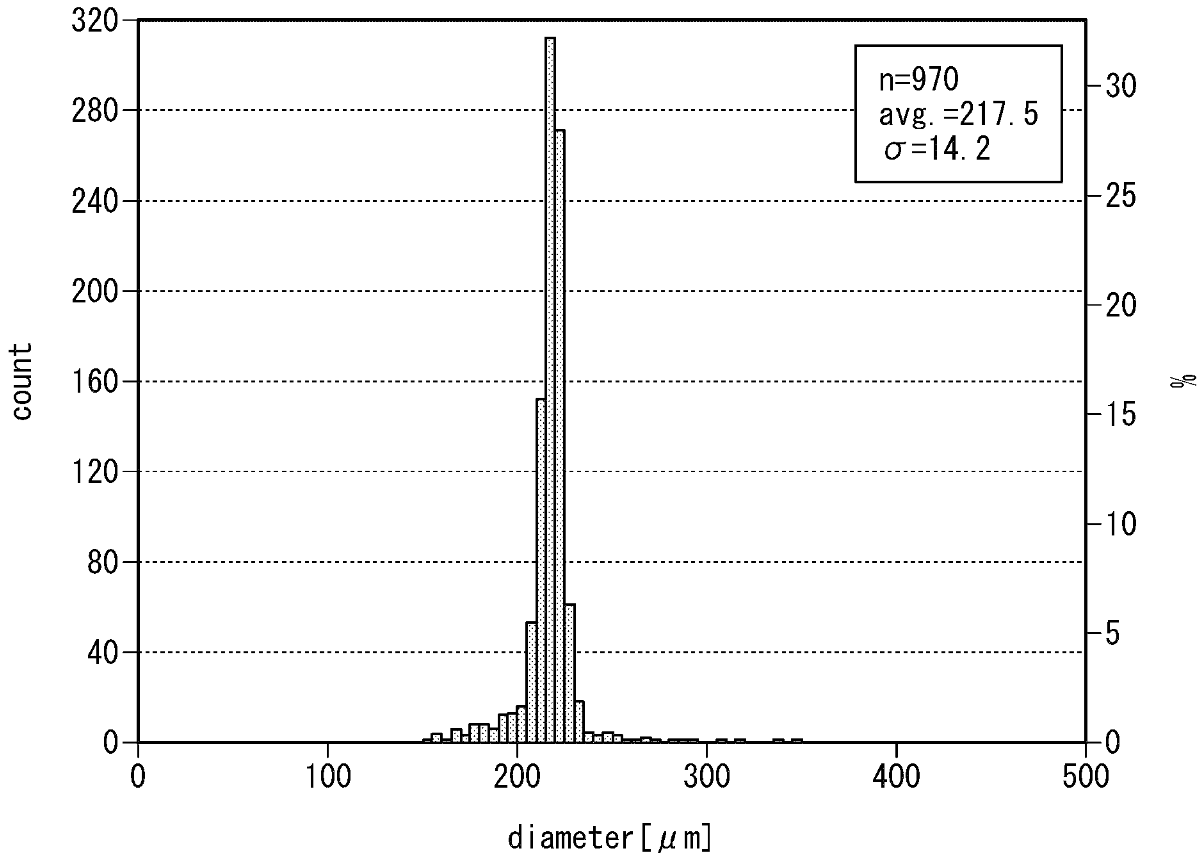
n=970
avg.=217.5
σ=14.2
count
%
diameter[μm]
0
40
80
120
160
200
240
280
320
5
10
15
20
25
30
100
200
300
400
500

FIG. 9

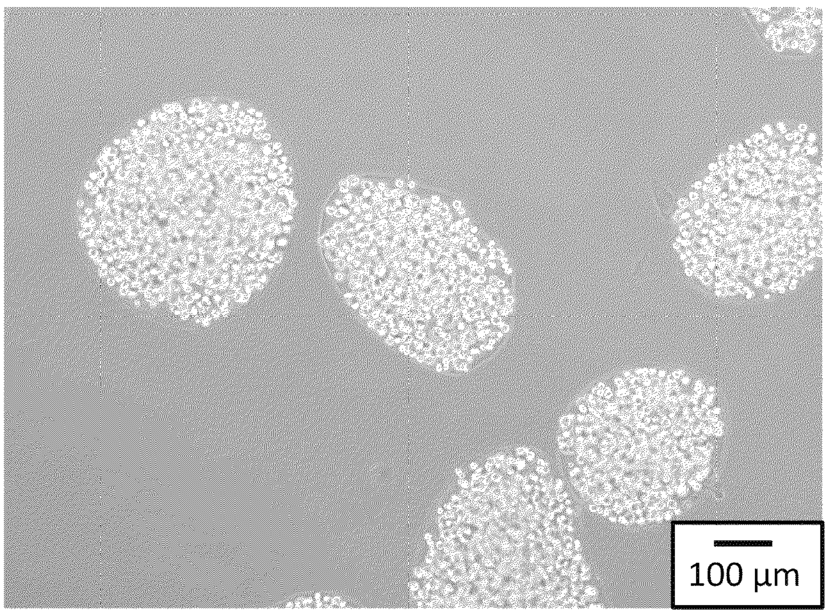
100 μm

Europäisches Patentamt
European Patent Office
Office européen des brevets

# EUROPEAN SEARCH REPORT

Application Number
EP 25 16 2947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2001/038402 A1 (PERCIN GOKHAN [US] ET AL) 8 November 2001 (2001-11-08)<br>* figure 1 *<br>* paragraphs [0018] - [0019] * | 1-8<br>9 | INV.<br>B01J13/04<br>B01J2/18 |
| Y | US 9 320 297 B2 (LEMNISCATE INNOVATIONS LLC [US]) 26 April 2016 (2016-04-26)<br>* claim 1 * | 9 | |
| A | WO 2011/009133 A1 (NEKTAR THERAPEUTICS [US]; GORDON BENJAMIN MORRIS [GB] ET AL.) 20 January 2011 (2011-01-20)<br>* the whole document * | 1-8 | |
| A | US 6 357 866 B1 (VAN RENSBURG RICHARD WILHELM J [GB]) 19 March 2002 (2002-03-19)<br>* the whole document * | 1-8 | |
| A | US 2009/308945 A1 (LOVERICH JACOB [US] ET AL) 17 December 2009 (2009-12-17)<br>* the whole document * | 1-8 | TECHNICAL FIELDS SEARCHED (IPC) |
| A | US 2014/377091 A1 (DELEVOYE ELISABETH [FR] ET AL) 25 December 2014 (2014-12-25)<br>* the whole document * | 1-8 | B01J |

The present search report has been drawn up for all claims

1

| Place of search | Date of completion of the search | Examiner |
|---|---|---|
| The Hague | 28 August 2025 | Tarallo, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 16 2947

This annex lists the patent family members relating to the patent documents cited in the above-mentioned European search report. The members are as contained in the European Patent Office EDP file on
The European Patent Office is in no way liable for these particulars which are merely given for the purpose of information.

28-08-2025

| Patent document cited in search report | Publication date | Patent family member(s) | Publication date |
|---|---|---|---|
| US 2001038402 A1 | 08-11-2001 | AU 3986401 A | 03-09-2001 |
| | | CA 2401658 A1 | 30-08-2001 |
| | | EP 1261487 A2 | 04-12-2002 |
| | | JP 2003524542 A | 19-08-2003 |
| | | US 2001038402 A1 | 08-11-2001 |
| | | WO 0162394 A2 | 30-08-2001 |
| US 9320297 B2 | 26-04-2016 | CA 2906513 A1 | 02-10-2014 |
| | | CN 104041930 A | 17-09-2014 |
| | | EP 2967002 A2 | 20-01-2016 |
| | | JP 6449227 B2 | 09-01-2019 |
| | | JP 2016519567 A | 07-07-2016 |
| | | US 2013251862 A1 | 26-09-2013 |
| | | US 2016205991 A1 | 21-07-2016 |
| | | US 2020138086 A1 | 07-05-2020 |
| | | WO 2014159678 A2 | 02-10-2014 |
| WO 2011009133 A1 | 20-01-2011 | AU 2010273957 A1 | 23-02-2012 |
| | | BR 112012001074 A2 | 16-02-2016 |
| | | CA 2768487 A1 | 20-01-2011 |
| | | CN 102573745 A | 11-07-2012 |
| | | CY 1118401 T1 | 28-06-2017 |
| | | DK 2453864 T3 | 09-01-2017 |
| | | EA 201200134 A1 | 30-08-2012 |
| | | EP 2453864 A1 | 23-05-2012 |
| | | ES 2614917 T3 | 02-06-2017 |
| | | HR P20161699 T1 | 24-02-2017 |
| | | HU E032278 T2 | 28-09-2017 |
| | | IL 217512 A | 30-06-2016 |
| | | JP 5841942 B2 | 13-01-2016 |
| | | JP 2012533367 A | 27-12-2012 |
| | | KR 20120052997 A | 24-05-2012 |
| | | LT 2453864 T | 10-03-2017 |
| | | ME 02647 B | 20-06-2017 |
| | | PL 2453864 T3 | 29-09-2017 |
| | | PT 2453864 T | 22-12-2016 |
| | | SI 2453864 T1 | 28-02-2017 |
| | | SM T201700045 B | 08-03-2017 |
| | | SM T201700045 T1 | 08-03-2017 |
| | | US 2012111963 A1 | 10-05-2012 |
| | | US 2016058958 A1 | 03-03-2016 |
| | | WO 2011009133 A1 | 20-01-2011 |
| US 6357866 B1 | 19-03-2002 | CA 2265181 A1 | 19-09-1999 |
| | | DE 69932463 T2 | 23-08-2007 |
| | | EP 0943436 A2 | 22-09-1999 |

EPO FORM P0459

For more details about this annex : see Official Journal of the European Patent Office, No. 12/82

page 1 of 2

## ANNEX TO THE EUROPEAN SEARCH REPORT ON EUROPEAN PATENT APPLICATION NO. EP 25 16 2947

This annex lists the patent family members relating to the patent documents cited in the above-mentioned European search report. The members are as contained in the European Patent Office EDP file on
The European Patent Office is in no way liable for these particulars which are merely given for the purpose of information.

28-08-2025

| Patent document cited in search report | Publication date | Patent family member(s) | Publication date |
|---|---|---|---|
| | | GB 2335628 A | 29-09-1999 |
| | | JP H11314358 A | 16-11-1999 |
| | | US 6357866 B1 | 19-03-2002 |
| US 2009308945 A1 | 17-12-2009 | CA 2765882 A1 | 23-12-2009 |
| | | US 2009308945 A1 | 17-12-2009 |
| | | WO 2009155245 A1 | 23-12-2009 |
| US 2014377091 A1 | 25-12-2014 | EP 2758664 A1 | 30-07-2014 |
| | | FR 2980535 A1 | 29-03-2013 |
| | | US 2014377091 A1 | 25-12-2014 |
| | | WO 2013041700 A1 | 28-03-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2024178698 A
- JP 2024042215 A
- JP 5858451 B
- JP 2010201350 A